(19) Europäisches Patentamt
European Patent Office
Office européen des brevets

(11) **EP 4 534 326 A1**

(12) **EUROPEAN PATENT APPLICATION**
published in accordance with Art. 153(4) EPC

(43) Date of publication:
**09.04.2025 Bulletin 2025/15**

(21) Application number: **22948502.4**

(22) Date of filing: **30.06.2022**

(51) International Patent Classification (IPC):
**B60L 15/20** (2006.01)     **B60W 30/182** (2020.01)
**B60W 40/00** (2006.01)

(52) Cooperative Patent Classification (CPC):
**B60L 15/20; B60W 30/182; B60W 40/00**

(86) International application number:
**PCT/CN2022/102795**

(87) International publication number:
**WO 2024/000394 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **LIU, Donghui
  Shenzhen, Guangdong 518129 (CN)**
• **GUO, Zhenhua
  Shenzhen, Guangdong 518129 (CN)**
• **ZHOU, Guozhu
  Shenzhen, Guangdong 518129 (CN)**
• **ZHANG, Siliang
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD AND APPARATUS FOR ADJUSTING SPEED LIMIT VALUE, AND VEHICLE**

(57)     Embodiments of this application provide a speed limit value adjustment method and apparatus, and a vehicle. The method includes: obtaining an accelerator pedal opening and/or an accelerator pedal opening change rate of a vehicle running in a first mode, where a speed limit value of the vehicle in the first mode is a first speed limit value; and adjusting the speed limit value of the vehicle to a second speed limit value when it is detected that the accelerator pedal opening and/or the accelerator pedal opening change rate meet/meets a preset condition. The second speed limit value is greater than the first speed limit value. Embodiments of this application can be applied to an intelligent vehicle or an electric vehicle, to help improve safety of the vehicle, and also help improve user experience.

1100

```
┌──────────────────────────────────────────────────────────┐
│ Obtain an accelerator pedal opening and/or an accelerator │ 1101
│ pedal opening change rate of a vehicle running in a first │
│ mode, where a speed limit value of the vehicle in the     │
│ first mode is a first speed limit value                   │
└──────────────────────────────────────────────────────────┘
                            │
                            ▼
┌──────────────────────────────────────────────────────────┐
│ Adjust the speed limit value of the vehicle to a second   │ 1102
│ speed limit value when it is detected that the accelerator│
│ pedal opening and/or the accelerator pedal opening change │
│ rate meet/meets a preset condition, where the second      │
│ speed limit value is greater than the first speed limit   │
│ value                                                     │
└──────────────────────────────────────────────────────────┘
```

FIG. 11

## Description

### TECHNICAL FIELD

Embodiments of this application relate to the field of intelligent driving, and more specifically, to a speed limit value adjustment method and apparatus, and a vehicle.

### BACKGROUND

Range anxiety is a common problem for new energy vehicles, especially in a scenario in which a battery level is low or a range is insufficient. Therefore, improving the range is crucial. It is very effective to reduce energy consumption by limiting a vehicle speed, because high wind resistance generated at a high vehicle speed leads to high energy consumption of a vehicle. In addition, intense driving of a user can be reduced by limiting the vehicle speed. Currently, a speed limit value of the vehicle is usually fixed. This affects safety of the vehicle.

### SUMMARY

Embodiments of this application provide a speed limit value adjustment method and apparatus, and a vehicle, to help improve safety of the vehicle, and also help improve user experience.

A vehicle (sometimes referred to as a vehicle for short) in this application is a vehicle in a broad sense, and may be a transport means (for example, a car, a truck, a motorcycle, an airplane, a train, or a ship), an industrial vehicle (for example, a pallet truck, a trailer, or a tractor), an engineering vehicle (for example, an excavator, a bulldozer, or a crane), an agricultural device (for example, a lawn mower or a harvester), an amusement device, a toy vehicle, and the like. A type of the vehicle is not specifically limited in embodiments of this application.

According to a first aspect, a speed limit value adjustment method is provided. The method includes: obtaining an accelerator pedal opening and/or an accelerator pedal opening change rate of a vehicle running in a first mode, where a speed limit value of the vehicle in the first mode is a first speed limit value; and adjusting the speed limit value of the vehicle to a second speed limit value when it is detected that the accelerator pedal opening and/or the accelerator pedal opening change rate meet/meets a preset condition. The second speed limit value is greater than the first speed limit value.

In embodiments of this application, when the accelerator pedal opening and/or the accelerator pedal opening change rate meet/meets the preset condition, the vehicle can increase the speed limit value from the first speed limit value to the second speed limit value. In this way, whether a user has an intention of emergency acceleration can be determined by using the accelerator pedal opening and/or the accelerator pedal opening change rate. The speed limit value is increased when it is recognized that the user has the intention of emergency acceleration. This helps ensure that the vehicle has room for speed-up in an emergency (for example, when overtaking needs to be performed), helps improve safety of the vehicle, and also helps improve driving experience of the user. In addition, the speed limit value is dynamically adjusted. This can meet requirements of the vehicle in different scenarios, and help improve intelligence of the vehicle.

An accelerator pedal may also be understood as an accelerator.

In some possible implementations, the method further includes: determining that the vehicle enters the first mode before the accelerator pedal opening and/or the accelerator pedal opening change rate is obtained.

In some possible implementations, the first mode is an ECO mode or a power-saving mode.

In some possible implementations, it is determined that the vehicle enters the first mode when an operation of selecting, by the user, the first mode from a plurality of modes is detected. Alternatively, it is determined that the vehicle enters the first mode when it is detected that the user turns off some or all of a plurality of accessories (for example, accessories such as air conditioning, a central display screen, audio, lighting, and a seat).

In some possible implementations, the method further includes: prompting the user that the speed limit value of the vehicle is adjusted from the first speed limit value to the second speed limit value.

With reference to the first aspect, in some implementations of the first aspect, the adjusting the speed limit value of the vehicle to a second speed limit value when it is detected that the accelerator pedal opening and/or the accelerator pedal opening change rate meet/meets a preset condition includes: adjusting the speed limit value of the vehicle to the second speed limit value when it is detected that the accelerator pedal opening is greater than or equal to a first threshold; and/or adjusting the speed limit value of the vehicle to the second speed limit value when it is detected that the accelerator pedal opening change rate is greater than or equal to a second threshold.

In embodiments of this application, the vehicle can increase the speed limit value from the first speed limit value to the second speed limit value when it is detected that the accelerator pedal opening is greater than or equal to the first threshold and/or it is detected that the accelerator pedal opening change rate is greater than or equal to the second threshold. This helps ensure that the vehicle has the room for speed-up in the emergency (for example, when overtaking needs to be performed), helps improve safety of the vehicle, and also helps improve driving experience of the user. In addition, the speed limit value is dynamically adjusted. This can meet the requirements of the vehicle in the different scenarios, and help improve intelligence of the vehicle.

In some possible implementations, the adjusting the speed limit value of the vehicle to a second speed limit value includes: adjusting the speed limit value of the vehicle to the second speed limit value based on a difference between the accelerator pedal opening and the first threshold.

In some possible implementations, the adjusting the speed limit value of the vehicle to a second speed limit value includes: adjusting the speed limit value of the vehicle to the second speed limit value based on the accelerator pedal opening change rate.

With reference to the first aspect, in some implementations of the first aspect, the adjusting the speed limit value of the vehicle to the second speed limit value when it is detected that the accelerator pedal opening change rate is greater than or equal to a second threshold includes: adjusting the speed limit value of the vehicle to the second speed limit value within first preset duration when it is detected that the accelerator pedal opening change rate is greater than or equal to the second threshold.

In embodiments of this application, the speed limit value of the vehicle can be adjusted to the second speed limit value within the first preset duration when it is detected that the accelerator pedal opening change rate is greater than or equal to the second threshold. This ensures that the vehicle has room for speed-up within the first preset duration, helps improve safety of the vehicle, and also helps improve driving experience of the user.

In some possible implementations, the adjusting the speed limit value of the vehicle to the second speed limit value when it is detected that the accelerator pedal opening is greater than or equal to a first threshold includes: adjusting the speed limit value of the vehicle to the second speed limit value within fourth duration when it is detected that the accelerator pedal opening is greater than or equal to the first threshold.

With reference to the first aspect, in some implementations of the first aspect, the method further includes: adjusting the speed limit value of the vehicle to the first speed limit value when it is detected that the accelerator pedal opening is less than or equal to the first threshold; and/or adjusting the speed limit value of the vehicle to the first speed limit value when it is detected that duration within which the accelerator pedal opening change rate is less than or equal to the second threshold is greater than or equal to second preset duration.

In embodiments of this application, the speed limit value of the vehicle can be adjusted to the first speed limit value when it is detected that the accelerator pedal opening is less than or equal to the first threshold and/or it is detected that the duration within which the accelerator pedal opening change rate is less than or equal to the second threshold is greater than or equal to the second preset duration. This ensures that the vehicle automatically lowers the speed limit when currently being not in the emergency, thereby helping increase a range of the vehicle. In addition, the speed limit value is dynamically adjusted. This can meet the requirements of the vehicle in the different scenarios, and help improve intelligence of the vehicle.

In some possible implementations, the method further includes: prompting the user that the speed limit value of the vehicle is adjusted from the second speed limit value to the first speed limit value.

With reference to the first aspect, in some implementations of the first aspect, the adjusting the speed limit value of the vehicle to the first speed limit value includes: adjusting, within third preset duration, a vehicle speed of the vehicle from a current vehicle speed to the first speed limit value.

In embodiments of this application, the speed limit value of the vehicle can be adjusted from the second speed limit value to the first speed limit value within the third preset duration. This avoids impact caused by sharp deceleration to the user, and helps improve driving comfort of the user in a process of adjusting the speed limit value, thereby helping improve driving experience of the user.

With reference to the first aspect, in some implementations of the first aspect, the method further includes: adjusting the speed limit value of the vehicle to a third speed limit value when it is detected that a state of charge of the vehicle is less than or equal to a third threshold and/or a range corresponding to the state of charge is less than or equal to a fourth threshold. The first speed limit value is greater than the third speed limit value.

In embodiments of this application, when there is no navigation information, the speed limit value of the vehicle can be adjusted to the third speed limit value if it is detected that the state of charge of the vehicle is less than or equal to the third threshold and/or the range corresponding to the state of charge is less than or equal to the fourth threshold. The speed limit value of the vehicle is decreased. This can increase the range of the vehicle, and avoid a risk caused by an insufficient range to the user, thereby helping improve driving experience of the user.

In some possible implementations, the method further includes: prompting the user that the speed limit value of the vehicle is adjusted from the first speed limit value to the third speed limit value.

In some possible implementations, detecting that the range corresponding to the state of charge of the vehicle is less than or equal to the fourth threshold includes: determining the range based on historical energy consumption information and the state of charge of the vehicle, and determining that the range is less than or equal to the fourth threshold.

In some possible implementations, the vehicle currently travels along a first route. The historical energy consumption information of the vehicle includes historical energy consumption information obtained when the vehicle historically travels along the first route. Alternatively, the historical energy consumption information includes energy consumption information obtained when the vehicle recently travels a preset distance (for example, 100 km).

With reference to the first aspect, in some implementations of the first aspect, the method further includes: obtaining a first target mileage of the vehicle; determining a first range based on a first state of charge of the vehicle and the first speed limit value; and adjusting the speed limit value of the vehicle to a third speed limit value when the first range is less than or equal to a first distance. The first distance is determined based on the first target mileage, and the first speed limit value is greater than the third speed limit value.

In embodiments of this application, the vehicle can obtain the first target mileage and the first range under the first state of charge and the first speed limit value. If the first range is less than or equal to the first distance, the speed limit value of the vehicle can be adjusted to the third speed limit value. In this way, the speed limit value is decreased when the range cannot support the vehicle in completing a travel task. This can increase the range of the vehicle, and help avoid a risk caused by an insufficient range to the user, thereby helping improve driving experience of the user. In addition, the speed limit value is dynamically adjusted. This helps improve intelligence of the vehicle.

In some possible implementations, the method further includes: prompting the user that a destination cannot be reached by using the first speed limit value and that the speed limit value is already switched to the third speed limit value for the user.

In some possible implementations, a range of the vehicle is greater than the first distance under the first state of charge and the third speed limit value.

With reference to the first aspect, in some implementations of the first aspect, the method further includes: obtaining a second target mileage of the vehicle; determining a second range based on a second state of charge of the vehicle and the third speed limit value; and adjusting the speed limit value of the vehicle to a fourth speed limit value when the second range is less than or equal to a second distance. The second distance is determined based on the second target mileage, and the third speed limit value is greater than the fourth speed limit value.

In embodiments of this application, after the vehicle adjusts the speed limit value to the third speed limit value, the vehicle may further compute the second target mileage and the second range under the second state of charge and the third speed limit value. When the second range is less than or equal to the second distance, the speed limit value of the vehicle is adjusted to the fourth speed limit value. In this way, after the speed limit value is adjusted to the third speed limit value, the vehicle can further decrease the speed limit value when determining, after traveling a period of time based on the third speed limit value, that the range still cannot support the vehicle in completing the travel task. This further increases the range of the vehicle, and helps avoid the risk caused by the insufficient range to the user, thereby helping improve driving experience of the user.

With reference to the first aspect, in some implementations of the first aspect, the obtaining a second target mileage of the vehicle includes: obtaining the second target mileage when an operation of switching the destination by the user is detected; or obtaining the second target mileage when the destination cannot be reached based on the third speed limit value.

In embodiments of this application, the vehicle can obtain the second target mileage when detecting the operation of changing the destination by the user or when the vehicle cannot reach the destination based on the third speed limit value. The speed limit value of the vehicle can be decreased in time when the second range is less than or equal to the second distance determined based on the second target mileage. This helps reduce the risk caused by the insufficient range to the user, thereby helping improve driving experience of the user.

In some possible implementations, a range of the vehicle is greater than the second distance under the second state of charge and the fourth speed limit value.

In some possible implementations, the vehicle may prompt the user to charge the vehicle or prompt the user to switch the destination if the vehicle determines, in a process of traveling based on the fourth speed limit value, that the destination cannot be reached based on the fourth speed limit value and the speed limit value can be no longer decreased. In this case, the vehicle may maintain the minimum speed limit value.

With reference to the first aspect, in some implementations of the first aspect, the obtaining a first target mileage includes: receiving information about the first target mileage; and obtaining the first target mileage when an operation of entering the destination by the user is detected; or obtaining the first target mileage based on a historical travel record.

In embodiments of this application, the vehicle can receive the information about the first target mileage sent by another device (for example, a map server), can obtain, when detecting the operation of entering the destination by the user, the information about the first target mileage based on the destination, or can obtain the information about the first target mileage based on the historical travel record of the vehicle. In this way, the vehicle can compare a range under a speed limit value with the first distance determined based on the first target mileage, to determine whether the vehicle can travel to the destination. This helps reduce the risk caused by the insufficient range to the user, thereby helping improve driving experience of the user.

In some possible implementations, the receiving information about the first target mileage includes: sending energy consumption information of the vehicle and information about the destination to the map server; and receiving the first target mileage that is determined by the map server based on the energy consumption information of the vehicle and the destination. In this way, the energy consumption information of the vehicle is sent to the map server, so that the first target mileage determined by the map server is more accurate. This helps further improve accuracy of determining, by the vehicle, whether the range supports the vehicle in completing the travel task, and helps reduce the risk caused by the insufficient range to the user, thereby helping improve the driving experience of the user.

With reference to the first aspect, in some implementations of the first aspect, the determining a first range based on a first state of charge of the vehicle and the first speed limit value includes: determining the first range based on the first state of charge of the vehicle, the first speed limit value, and historical energy consumption information of the vehicle.

In embodiments of this application, the range of the vehicle can be further determined with reference to the historical energy consumption information of the vehicle. In this way, the range computed by the vehicle can be more accurate. This helps reduce the risk caused by the insufficient range to the user, thereby helping improve driving experience of the user.

In some possible implementations, the vehicle currently travels along a first route. The historical energy consumption information of the vehicle includes historical energy consumption information obtained when the vehicle historically travels along the first route. Alternatively, the historical energy consumption information includes energy consumption information obtained when the vehicle recently travels a preset distance (for example, 100 km).

With reference to the first aspect, in some implementations of the first aspect, the method further includes: when it is detected that the vehicle is on a first-type road, adjusting the speed limit value of the vehicle to a fifth speed limit value based on a congestion degree of the road and/or a speed limit value of the road. The first-type road includes a highway, an urban road, or a suburban road.

In embodiments of this application, the vehicle can adjust the speed limit value based on a road type and a congestion status of the road. In this way, the process of adjusting the speed limit value is more consistent with a real scenario. This helps improve driving experience of the user.

With reference to the first aspect, in some implementations of the first aspect, the adjusting the speed limit value of the vehicle to a fifth speed limit value based on a congestion degree of the road and/or a speed limit value of the road includes: adjusting the speed limit value of the vehicle to the fifth speed limit value when the road is smooth and the speed limit value of the road is greater than the first speed limit value. The fifth speed limit value is greater than the first speed limit value.

In embodiments of this application, the speed limit value of the vehicle can be increased when the road is smooth and the speed limit value of the road is greater than a current speed limit value of the vehicle. In this way, driving experience is better when the vehicle travels on the smooth road.

With reference to the first aspect, in some implementations of the first aspect, the adjusting the speed limit value of the vehicle to a fifth speed limit value based on a congestion degree of the road and/or a speed limit value of the road includes: when the road is congested, adjusting the speed limit value of the vehicle to the fifth speed limit value. The fifth speed limit value is less than the first speed limit value.

In embodiments of this application, when the road is congested, the speed limit value of the vehicle can be decreased. This can avoid a power consumption waste caused by sharp acceleration or sharp deceleration by the user in a congested case, thereby helping increase the range of the vehicle.

In some possible implementations, the method further includes: determining the congestion degree of the road based on navigation information and/or the historical travel record.

In some possible implementations, the historical travel record includes information about a speed at which the vehicle travels on the road.

In some possible implementations, the adjusting the speed limit value of the vehicle to the fifth speed limit value includes: adjusting the speed limit value of the vehicle to the fifth speed limit value based on the congestion degree of the road.

In embodiments of this application, the vehicle can dynamically adjust the speed limit value based on the congestion degree of the road. For example, a speed limit value obtained when the road is particularly congested is less than a speed limit value obtained when the road is generally congested. This can avoid a power consumption waste caused by sharp acceleration or sharp deceleration by the user in the congested case, thereby helping increase the range of the vehicle and being more consistent with an actual scenario.

According to a second aspect, a speed limit value adjustment apparatus is provided. The apparatus includes: an obtaining unit, configured to obtain an accelerator pedal opening and/or an accelerator pedal opening change rate of a vehicle running in a first mode, where a speed limit value of the vehicle in the first mode is a first speed limit value; and an adjustment unit, configured to adjust the speed limit value of the vehicle to a second speed limit value when the accelerator pedal opening and/or the accelerator pedal opening change rate meet/meets a preset condition. The second speed limit value is greater than the first speed limit value.

With reference to the second aspect, in some implementations of the second aspect, the adjustment unit is specifically configured to: adjust the speed limit value of the vehicle to the second speed limit value when it is detected that the accelerator pedal opening is greater than or equal to a first threshold; and/or adjust the speed limit value of the vehicle to the second speed limit value when it is detected that the accelerator pedal opening change rate is greater than or equal to a second threshold.

With reference to the second aspect, in some implementations of the second aspect, the adjustment unit is specifically configured to: adjust the speed limit value of the vehicle to the second speed limit value within first preset duration when it is detected that the accelerator pedal opening change rate is greater than or equal to the second threshold.

With reference to the second aspect, in some implementations of the second aspect, the adjustment unit is further configured to: adjust the speed limit value of the vehicle to the first speed limit value when the accelerator pedal opening is less than or equal to the first threshold; and/or adjust the speed limit value of the vehicle to the first speed limit value when duration within which the accelerator pedal opening change rate is less than or equal to the second threshold is greater than or equal to second preset duration.

With reference to the second aspect, in some implementations of the second aspect, the adjustment unit is specifically configured to: adjust, within third preset duration, a vehicle speed of the vehicle from a current vehicle speed to the first speed limit value.

With reference to the second aspect, in some implementations of the second aspect, the adjustment unit is further configured to adjust the speed limit value of the vehicle to a third speed limit value when a state of charge of the vehicle is less than or equal to a third threshold and/or a range corresponding to the state of charge is less than or equal to a fourth threshold. The first speed limit value is greater than the third speed limit value.

With reference to the second aspect, in some implementations of the second aspect, the apparatus further includes a determining unit. The obtaining unit is further configured to obtain a first target mileage of the vehicle. The determining unit is configured to determine a first range based on a first state of charge of the vehicle and the first speed limit value. The adjustment unit is further configured to adjust the speed limit value of the vehicle to a third speed limit value when the first range is less than or equal to a first distance. The first distance is determined based on the first target mileage, and the first speed limit value is greater than the third speed limit value.

With reference to the second aspect, in some implementations of the second aspect, the obtaining unit is further configured to obtain a second target mileage of the vehicle. The determining unit is further configured to determine a second range based on a second state of charge of the vehicle and the third speed limit value. The adjustment unit is further configured to adjust the speed limit value of the vehicle to a fourth speed limit value when the second range is less than or equal to a second distance. The second distance is determined based on the second target mileage, and the third speed limit value is greater than the fourth speed limit value.

With reference to the second aspect, in some implementations of the second aspect, the obtaining unit is specifically configured to: obtain the second target mileage when a user switches a destination; or obtaining the second target mileage when a destination cannot be reached based on the third speed limit value.

With reference to the second aspect, in some implementations of the second aspect, the obtaining unit is specifically configured to: receive information about the first target mileage; and when the user enters the destination, obtain the first target mileage based on the destination; or obtain the first target mileage based on a historical travel record.

With reference to the second aspect, in some implementations of the second aspect, the determining unit is specifically configured to: determine the first range based on the first state of charge of the vehicle, the first speed limit value, and historical energy consumption information of the vehicle.

With reference to the second aspect, in some implementations of the second aspect, the adjustment unit is further configured to: when the vehicle is on a first-type road, adjust the speed limit value of the vehicle to a fifth speed limit value based on a congestion degree of the road and/or a speed limit value of the road. The first-type road includes a highway, an urban road, or a suburban road.

With reference to the second aspect, in some implementations of the second aspect, the adjustment unit is specifically configured to: adjust the speed limit value of the vehicle to the fifth speed limit value when the road is smooth and the speed limit value of the road is greater than the first speed limit value. The fifth speed limit value is greater than the first speed limit value.

With reference to the second aspect, in some implementations of the second aspect, the adjustment unit is specifically configured to: when the road is congested, adjust the speed limit value of the vehicle to the fifth speed limit value. The fifth speed limit value is less than the first speed limit value.

With reference to the second aspect, in some implementations of the second aspect, the first mode is an ECO mode or a power-saving mode.

According to a third aspect, an apparatus is provided. The apparatus includes a processing unit and a storage unit. The storage unit is configured to store instructions. The processing unit executes the instructions stored in the storage unit, to enable the apparatus to perform any possible method according to the first aspect.

According to a fourth aspect, a controller is provided. The vehicle control unit includes a processing unit and a storage unit. The storage unit is configured to store instructions. The processing unit executes the instructions stored in the storage unit, to enable the apparatus to perform any possible method according to the first aspect.

With reference to the fourth aspect, in some implementations of the fourth aspect, the controller is a vehicle control unit.

With reference to the fourth aspect, in some implementations of the fourth aspect, the controller includes a vehicle control unit and a cockpit domain controller.

Optionally, the processing unit may include at least one processor, and the storage unit may be a memory. The memory may be a storage unit (for example, a register or a cache) in a chip, or may be a storage unit (for example, a read-only memory or a random access memory), that is outside a chip, in a transport means.

According to a fifth aspect, a terminal is provided. The terminal includes the apparatus according to any one of the second aspect and the third aspect.

With reference to the fifth aspect, in some implementations of the fifth aspect, the terminal is a vehicle. When the terminal is a vehicle, the vehicle may include the apparatus according to any one of the second aspect and the third aspect, or include the controller according to the fourth aspect.

According to a sixth aspect, a server is provided. The server includes the apparatus according to any one of the second aspect and the third aspect.

In some possible implementations, the server may be a virtual server, or the server may be a physical server.

According to a seventh aspect, a computer program product is provided. The computer program product includes computer program code. When the computer program code is run on a computer, the computer is enabled to perform any possible method according to the first aspect.

It should be noted that the computer program code may be completely or partially stored in a first storage medium. The first storage medium may be encapsulated with a processor, or encapsulated separately from a processor. This is not specifically limited in embodiments of this application.

According to an eighth aspect, a computer-readable medium is provided. The computer-readable medium stores program code. When the computer program code is run on a computer, the computer is enabled to perform any possible method according to the first aspect.

According to a ninth aspect, an embodiment of this application provides a chip system. The chip system includes a processor, configured to invoke a computer program or computer instructions stored in a memory, to enable the processor to perform any possible method according to the first aspect.

With reference to the ninth aspect, in a possible implementation, the processor is coupled to the memory through an interface.

With reference to the ninth aspect, in a possible implementation, the chip system further includes a memory. The memory stores a computer program or computer instructions.

## BRIEF DESCRIPTION OF DRAWINGS

FIG. 1 is a functional block diagram of a vehicle according to an embodiment of this application;

FIG. 2(a) to FIG. 2(c) show a group of graphical user interfaces GUIs according to an embodiment of this application;

FIG. 3(a) and FIG. 3(b) show another group of GUIs according to an embodiment of this application;

FIG. 4(a) and FIG. 4(b) show another GUI according to an embodiment of this application;

FIG. 5(a) to FIG. 5(c) show another group of GUIs according to an embodiment of this application;

FIG. 6(a) and FIG. 6(b) show another group of GUIs according to an embodiment of this application;

FIG. 7 is a diagram of a system architecture according to an embodiment of this application;

FIG. 8 is a schematic flowchart of a speed limit value adjustment method according to an embodiment of this application;

FIG. 9A and FIG. 9B are another schematic flowchart of a speed limit value adjustment method according to an embodiment of this application;

FIG. 10 is another schematic flowchart of a speed limit value adjustment method according to an embodiment of this application;

FIG. 11 is another schematic flowchart of a speed limit value adjustment method according to an embodiment of this application; and

FIG. 12 is a block diagram of a speed limit value adjustment apparatus according to an embodiment of this application.

## DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

Prefix words such as "first" and "second" in embodiments of this application are merely intended to distinguish between different described objects, and impose no limitation on locations, rankings, priorities, quantities, content, or the like of the described objects. In embodiments of this application, use of the prefix words used to distinguish between the described objects, such as ordinal numbers, constitutes no limitation on the described objects. For descriptions of the described object, refer to context descriptions in claims or embodiments. Use of the prefix words should not constitute a redundant limitation. In addition, in the descriptions of embodiments, unless otherwise specified, "a plurality of" means two or more than two.

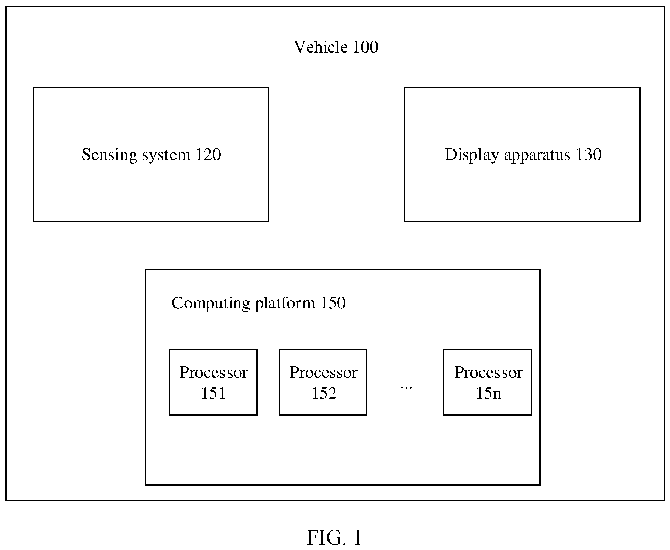

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an environment surrounding the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, millimeter wave radar, an ultrasonic radar, and an image shooting apparatus.

Some or all of functions of the vehicle 100 may be controlled by the computing platform 150. The computing platform 150 may include processors 151 to 15n (n is a positive integer). The processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a function by using a logical relationship of a hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by a programmable logic device (programmable logic device, PLD). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU). In addition, the computing platform 150 may further include a memory. The memory is configured to store instructions. Some or all of the processors 151 to 15n may invoke the instructions in the memory, and execute the instructions, to implement a corresponding function.

The display apparatus 130 in a cockpit is mainly classified into two categories: a vehicle-mounted display screen and a projection display screen like a head-up display (head-up display, HUD). The vehicle-mounted display screen is a physical display screen, and is an important constituent part of an in-vehicle infotainment system. A plurality of display screens may be disposed in the cockpit, such as a digital instrument display screen, a central display screen, a display screen in front of a passenger on a passenger seat (also referred to as a front passenger), a display screen in front of a left rear passenger, and a display screen in front of a right rear passenger. A window may be even used as a display for display. The head-up display, also referred to as a head-up display system, is mainly configured to display driving information such as a speed per hour and navigation on a display device (for example, a windshield) in front of a driver, to reduce line of sight transfer duration of the driver, avoid a pupil change caused by line of sight transfer of the driver, and improve driving safety and comfort. For example, the HUD includes a combiner head-up display (combiner HUD, C-HUD) system, a windshield head-up display (windshield HUD, W-HUD) system, an augmented reality head-up display (augmented reality HUD, AR-HUD) system.

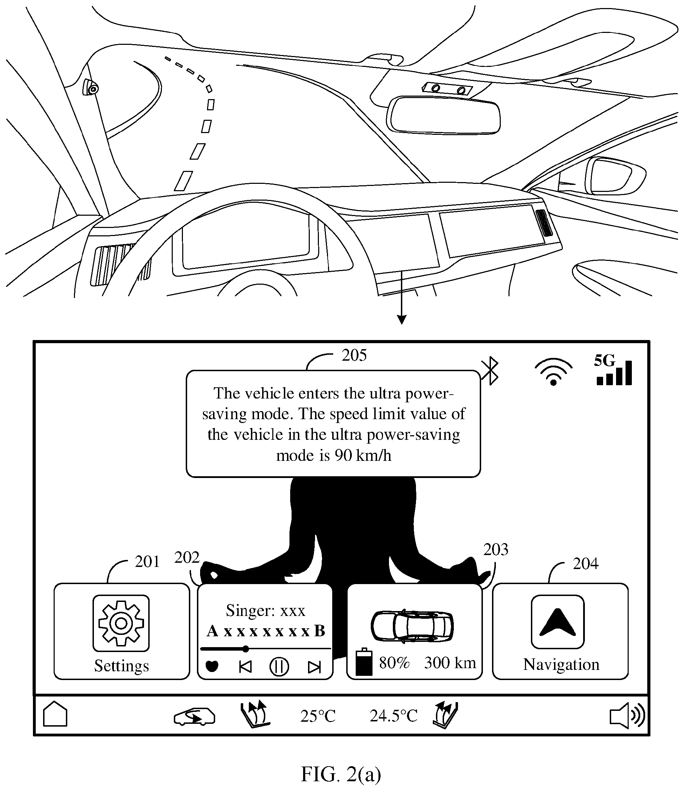

FIG. 2(a) to FIG. 2(c) show a group of graphical user interfaces (graphical user interfaces, GUIs) according to an embodiment of this application.

As shown in FIG. 2(a), a central display screen of a vehicle displays a wallpaper, avatar information of a user account logged in on the vehicle, a Bluetooth function icon, a Wi-Fi function icon, a cellular network signal icon, a card 201 for switching to display settings, a card 202 for switching to display an in-vehicle music application, a vehicle state of charge and remaining mileage display card 203, and a card 204 for switching to display a navigation application. The vehicle may display a prompt box 205 through the central display screen when it is detected that an operation of switching, by the user, a mode of the vehicle to an ultra power-saving mode. The prompt box 205 includes prompt information "The vehicle enters the ultra power-saving mode. The speed limit value of the vehicle in the ultra power-saving mode is 90 km/h".

"The speed limit value of the vehicle in the ultra power-saving mode is 90 km/h" displayed in the "prompt box" may be understood as that a default speed limit value in the ultra power-saving mode is 90 km/h.

In an embodiment, the vehicle may increase the speed limit value when it is detected that an accelerator pedal opening is greater than or equal to a first threshold. In this way, the vehicle can recognize, by detecting that the accelerator pedal opening is greater than or equal to the first threshold, that the user has an intention of emergency acceleration. The speed limit value can be increased, to implement acceleration of the vehicle in an emergency.

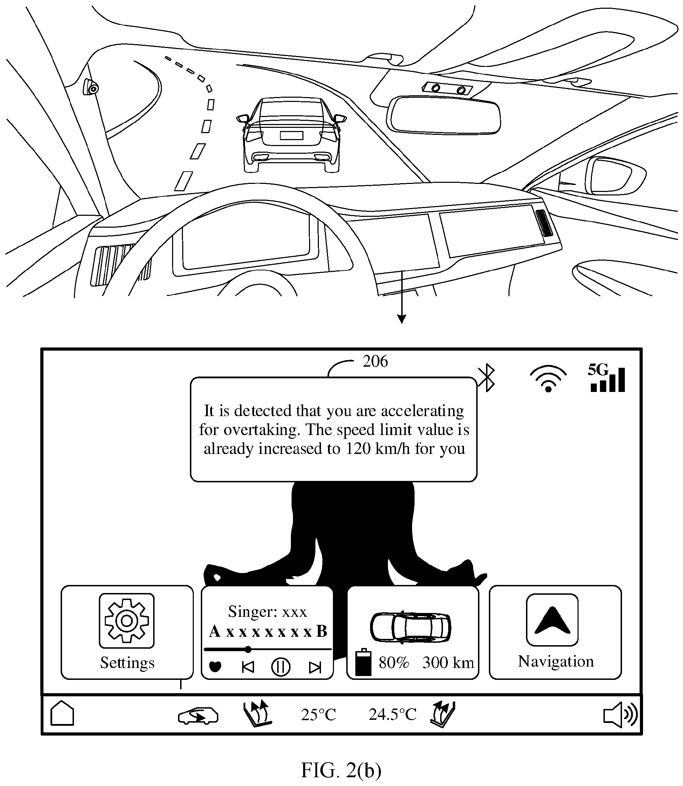

As shown in FIG. 2(b), the vehicle may consider, when it is detected that the accelerator pedal opening is greater than or equal to the first threshold (for example, 80%), that the user has an intention of acceleration for overtaking, and may accordingly display a prompt box 206 through the central display screen. The prompt box 206 includes prompt information "It is detected that you are accelerating for overtaking. The speed limit value is already increased to 120 km/h for you". The user can drive the vehicle to complete overtaking by increasing the speed limit from 90 km/h to 120 km/h.

In an embodiment, the vehicle may increase the speed limit value within fourth preset duration (for example, 30 seconds) when it is detected that the accelerator pedal opening is greater than or equal to the first threshold.

For example, the vehicle may start a timer when it is detected that the accelerator pedal opening is greater than or equal to the first threshold (for example, 80%). Duration of the timer may be 30 seconds. When the timer runs, the speed limit value of the vehicle is adjusted to 120 km/h. After the timer expires, the speed limit value of the vehicle is adjusted to 90 km/h.

For another example, when the timer runs (for example, the timer runs for 15 seconds), the vehicle may restart the timer if the vehicle detects again that the accelerator pedal opening is greater than or equal to the first threshold.

In an embodiment, that the vehicle may consider, when it is detected that the accelerator pedal opening is greater than or equal to the first threshold, that the user has an intention of acceleration for overtaking includes: determining, when it is detected that the accelerator pedal opening is greater than or equal to the first threshold and it is detected that the user turns on the left indicator light, that the user has the intention of acceleration for overtaking.

In an embodiment, that the vehicle may consider, when it is detected that the accelerator pedal opening is greater than or equal to the first threshold, that the user has an intention of acceleration for overtaking includes: determining, when it is detected that the accelerator pedal opening is greater than or equal to the first threshold, it is detected that the user turns on the left indicator light, and it is detected that another vehicle in a same lane as the vehicle is in front of the vehicle, that the user has the intention of acceleration for overtaking.

In an embodiment, the vehicle may determine, when it is detected that the another vehicle in the same lane as the vehicle is in the front of the vehicle and that the left indicator light of the another vehicle is also turned on, that the another vehicle has an intention to change the vehicle leftward, turn left, or turn around. In this case, the vehicle may maintain the default speed limit value in the ultra power-saving mode. In this way, a safety accident caused by acceleration for overtaking can be avoided.

In an embodiment, the vehicle may increase the speed limit value when it is detected that an accelerator pedal opening change rate is greater than or equal to a second threshold. In this way, the vehicle can recognize, by detecting that the accelerator pedal opening change rate is greater than or equal to the second threshold, that the user has the intention of emergency acceleration. The speed limit value can be increased, to implement acceleration of the vehicle in the emergency.

In an embodiment, the vehicle may increase the speed limit value within first preset duration (for example, 30 seconds) when it is detected that the accelerator pedal opening change rate is greater than or equal to the second threshold.

In an embodiment, when detecting that the user has the intention of emergency acceleration, the vehicle may increase the speed limit value based on a speed limit situation of a road. For example, the vehicle may increase the speed limit value from 90 km/h to 100 km/h when it is detected that a speed limit of the road is 100 km/h and that the accelerator pedal opening is greater than or equal to the first threshold.

In embodiments of this application, the vehicle can increase the speed limit value when the accelerator pedal opening and/or the accelerator pedal opening change rate meet/meets a preset condition. In this way, whether the user has the intention of emergency acceleration can be determined by using the accelerator pedal opening and/or the accelerator pedal opening change rate. The speed limit value is increased when it is recognized that the user has the intention of emergency acceleration. This helps ensure that the vehicle has room for speed-up in an emergency (for example, when overtaking needs to be performed), helps improve safety of the vehicle, and also helps improve driving experience of the user. In addition, the speed limit value is dynamically adjusted. This can meet the requirements of the vehicle in different scenarios, and help improve intelligence of the vehicle.

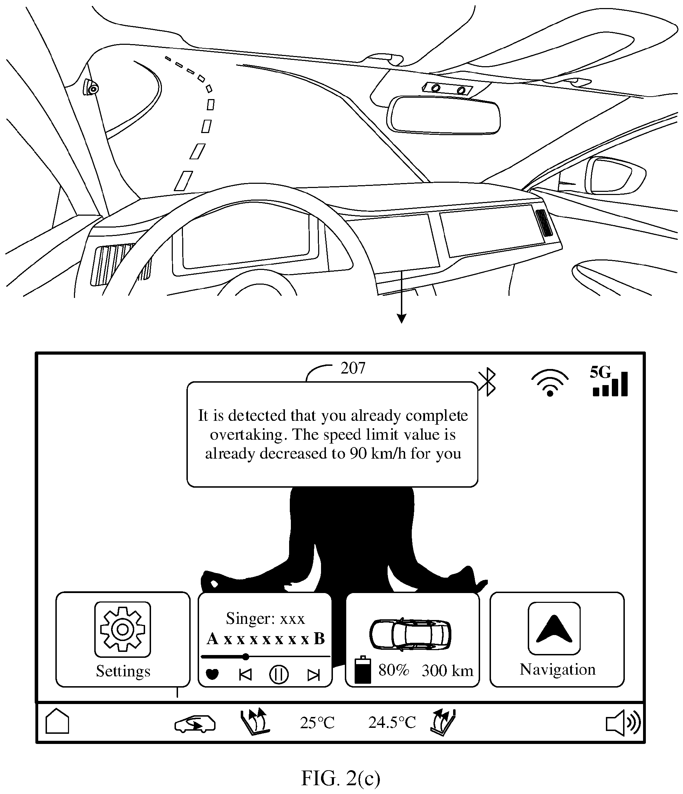

As shown in FIG. 2(c), the vehicle may recognize, when it is detected that the accelerator pedal opening is less than the first threshold, that the user already completes acceleration for overtaking, and may accordingly display a prompt box 207 through the central display screen. The prompt box 207 includes prompt information "It is detected that you already complete overtaking. The speed limit value is already decreased to 90 km/h for you".

In an embodiment, that the vehicle may recognize, when it is detected that the accelerator pedal opening is less than the first threshold, that the user already completes acceleration for overtaking includes: The vehicle may recognize, when it is detected that the accelerator pedal opening is less than the first threshold and it is detected that the user turns on the right indicator light and controls the vehicle to return to the original lane, that the user already completes acceleration for overtaking.

In an embodiment, the vehicle may adjust the speed limit value back to the default speed limit value in the ultra power-saving mode when it is detected that the accelerator pedal opening change rate is less than the second threshold. In this way, the vehicle can recognize, by detecting that the accelerator pedal opening change rate is less than the second threshold, that the user currently does not have the intention of emergency acceleration, and can adjust the speed limit value to the default speed limit value in the ultra power-saving mode. This increases a range of the vehicle. In addition, the user does not need to manually adjust the speed limit value to the default speed limit value. This helps improve intelligence of the vehicle.

In an embodiment, that the vehicle may adjust the speed limit value to the default speed limit value in the ultra power-saving mode when it is detected that the accelerator pedal opening change rate is less than the second threshold includes: The vehicle may adjust the speed limit value to the default speed limit value in the ultra power-saving mode when it is detected that duration within which the accelerator pedal opening change rate is less than the second threshold is greater than or equal to a second preset duration.

In an embodiment, that the vehicle may adjust the speed limit value to the default speed limit value in the ultra power-saving mode includes: adjusting, within third preset duration, the speed limit value to the default speed limit value in the ultra power-saving mode.

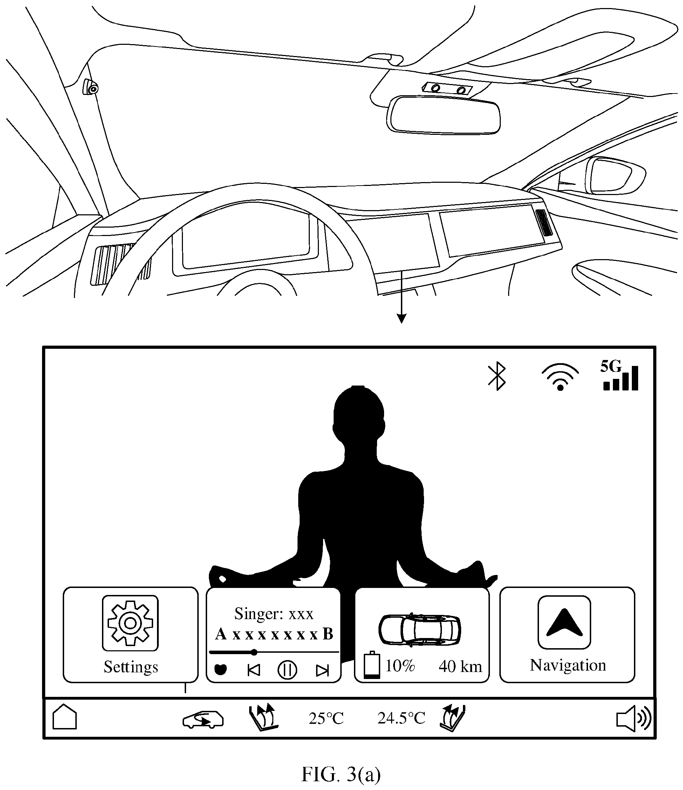

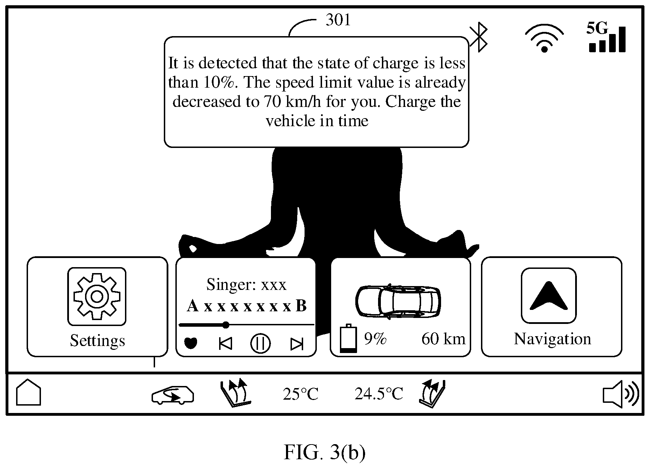

FIG. 3(a) and FIG. 3(b) show another group of GUIs according to an embodiment of this application.

As shown in FIG. 3(a), a vehicle is in an ultra power-saving mode, and a central display screen of the vehicle displays a wallpaper, an avatar information of a user account logged in on the vehicle, a Bluetooth function icon, a Wi-Fi function icon, a cellular network signal icon, and cards 201 to 204. In this case, a speed limit value of the vehicle may be a default speed limit value (for example, 90 km/h) in the ultra power-saving mode. A state of charge of the vehicle being 10% and a range of the vehicle being 40 km under the state of charge 10% and the default speed limit value are displayed on a vehicle state of charge and remaining mileage display card 203.

As shown in FIG. 3(b), the vehicle may display a prompt box 301 through the central display screen when it is detected that the state of charge is less than a third threshold (for example, 10%). The prompt box 301 includes prompt information "It is detected that the state of charge is less than 10%. The speed limit value is already decreased to 70 km/h. Charge the vehicle in time". In this case, the vehicle may adjust the speed limit value from 90 km/h to 70 km/h. The state of charge of the vehicle being 9% and the range of the vehicle being 60 km under the state of charge 9% and the speed limit value 70 km/h are displayed on the vehicle state of charge and remaining mileage display card 203.

In embodiments of this application, when there is no navigation information, the speed limit value of the vehicle can be decreased if it is detected that the state of charge of the vehicle is less than or equal to the third threshold. The speed limit value of the vehicle is decreased. This can increase a range of the vehicle, and avoid a risk caused by an insufficient range to a user, thereby helping improve driving experience of the user.

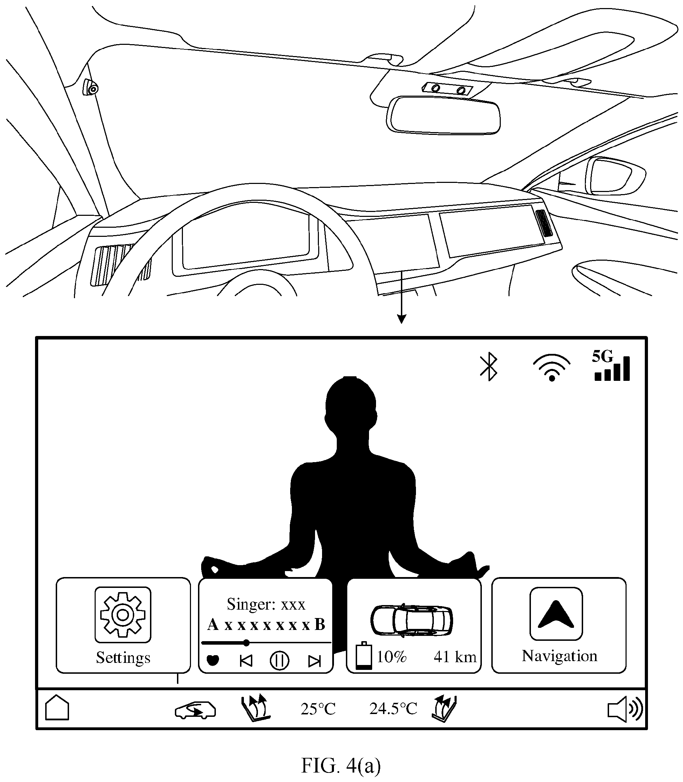

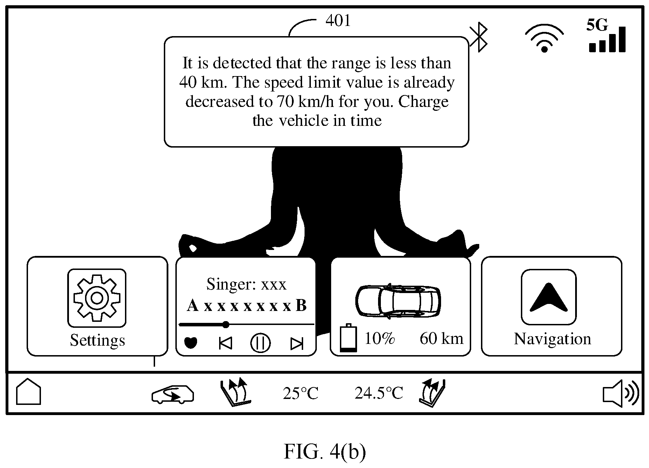

FIG. 4(a) and FIG. 4(b) show another group of GUIs according to an embodiment of this application.

As shown in FIG. 4(a), a vehicle is in an ultra power-saving mode, and a central display screen of the vehicle displays a wallpaper, an avatar information of a user account logged in on the vehicle, a Bluetooth function icon, a Wi-Fi function icon, a cellular network signal icon, and cards 201 to 204. In this case, a speed limit value of the vehicle may be a default speed limit value (for example, 90 km/h) in the ultra power-saving mode. A state of charge of the vehicle being 10% and a range of the vehicle being 41 km under the state of charge 10% and the default speed limit value are displayed on a vehicle state of charge and remaining mileage display card 203.

As shown in FIG. 3(b), the vehicle may display a prompt box 401 through the central display screen when it is detected that the range is less than a fourth threshold (for example, 40 km). The prompt box 401 includes prompt information "It is detected that the range is less than 40 km. The speed limit value is already decreased to 70 km/h. Charge the vehicle in time". In this case, the vehicle may adjust the speed limit value from 90 km/h to 70 km/h. The state of charge of the vehicle being 10% and the range of the vehicle being 60 km under the state of charge 10% and the speed limit value 70 km/h are displayed on the vehicle state of charge and remaining mileage display card 203.

In embodiments of this application, when there is no navigation information, the speed limit value of the vehicle can be decreased if it is detected that the range of the vehicle is less than or equal to the fourth threshold. The speed limit value of the vehicle is decreased. This can increase the range of the vehicle, and avoid a risk caused by an insufficient range to the user, thereby helping improve driving experience of the user.

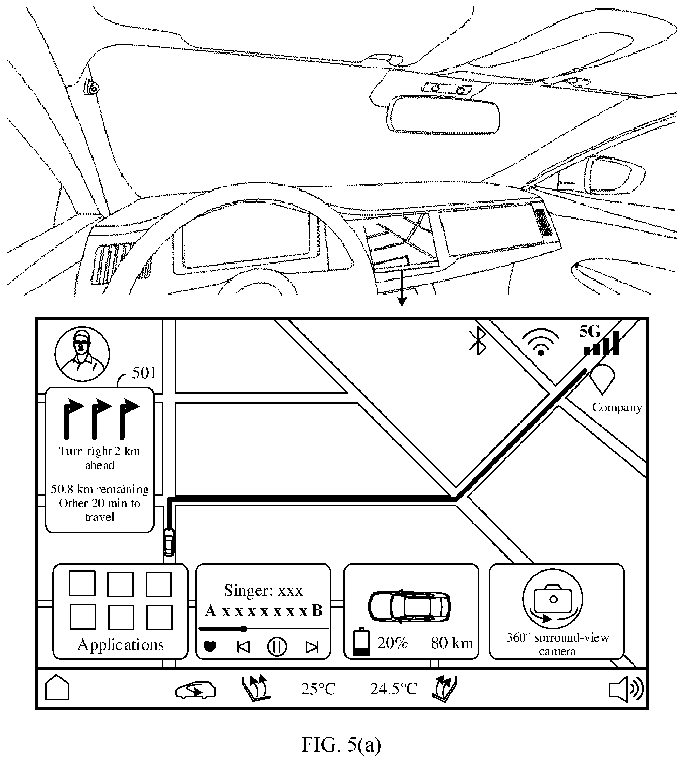

FIG. 5(a) to FIG. 5(c) show another group of GUIs according to an embodiment of this application.

As shown in FIG. 5(a), a vehicle is in an ultra power-saving mode, a central display screen of the vehicle displays a navigation route navigated from a current location to a company and navigation information 501. In this case, a speed limit value of the vehicle may be a default speed limit value (for example, 90 km/h) in the ultra power-saving mode. A state of charge of the vehicle being 20% and a range of the vehicle being 80 km under the state of charge 20% and the default speed limit value are displayed on a vehicle state of charge and remaining mileage display card 203.

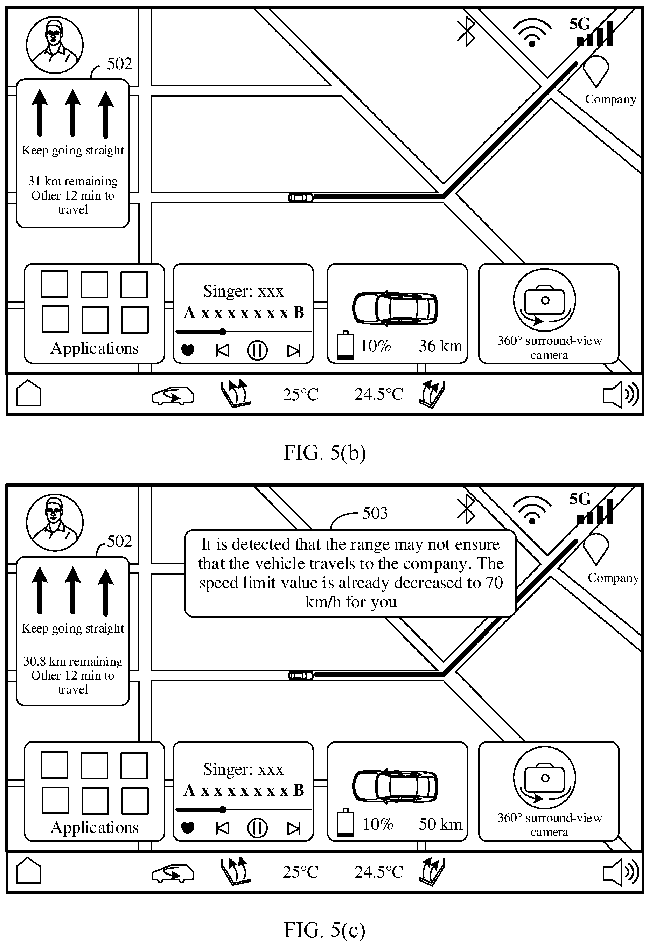

As shown in FIG. 5(b), during the vehicle travels, if a range (for example, a range being 36 km under a state of charge 10%) is greater than a first distance, the vehicle may continue to travel under the default speed limit value in the ultra power-saving mode.

In an embodiment, the first distance may be a target mileage (for example, 31 km) indicated in the navigation information 502, or may be a sum of a target mileage and a fixed value, or may be a product of a target mileage and a preset magnification (for example, 1.1 times).

As shown in FIG. 5(c), the vehicle may display a prompt box 503 through the central display screen when it is detected that the range is less than or equal to the target mileage indicated in the navigation information. The prompt box 503 includes prompt information "It is detected that the range may not ensure the vehicle to travel to the company. The speed limit value is already decreased to 70 km/h for you". In this case, the state of charge of the vehicle being 10% and the range of the vehicle being 60 km under the state of charge 10% and the speed limit value 70 km/h are displayed on the vehicle state of charge and remaining mileage display card 203.

In an embodiment, the vehicle may further decrease the speed limit value (for example, adjust the speed limit value to 60 km/h) when it is detected that the vehicle still cannot reach the company based on the speed limit value 70 km/h.

In an embodiment, if the minimum speed limit value of the vehicle is 60 km/h, when it is detected that the vehicle still cannot reach the company based on the speed limit value 60 km/h, the vehicle may prompt the user that the vehicle cannot reach the destination, or prompt the user to charge the vehicle immediately.

In embodiments of this application, the vehicle can obtain the target mileage and a range under the state of charge and a speed limit value. The speed limit value of the vehicle can be decreased if the range is less than or equal to the first distance. In this way, the speed limit value is decreased when the range cannot support the vehicle in completing a travel task. This can increase the range of the vehicle, and help avoid a risk caused by an insufficient range to the user, thereby helping improve driving experience of the user. In addition, the speed limit value is dynamically adjusted. This helps improve intelligence of the vehicle.

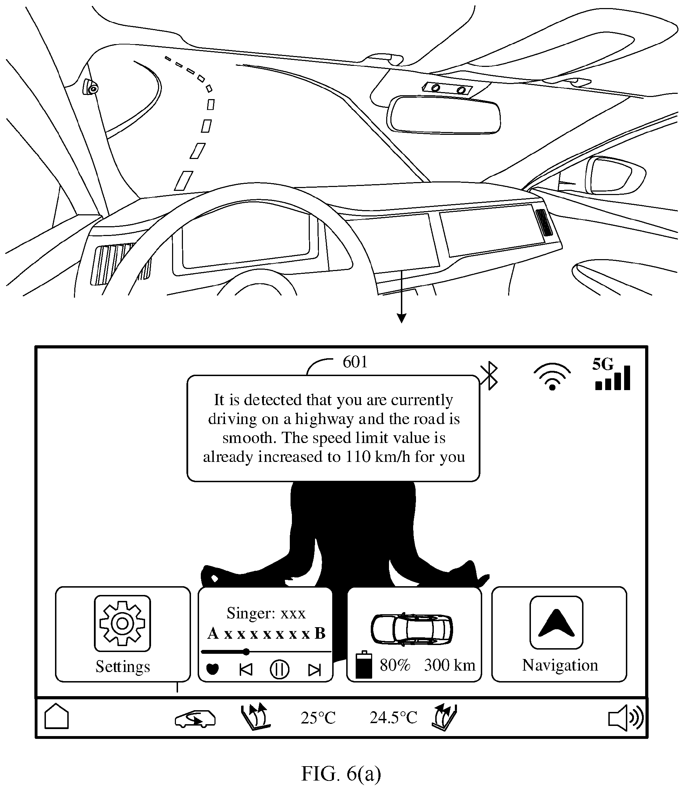

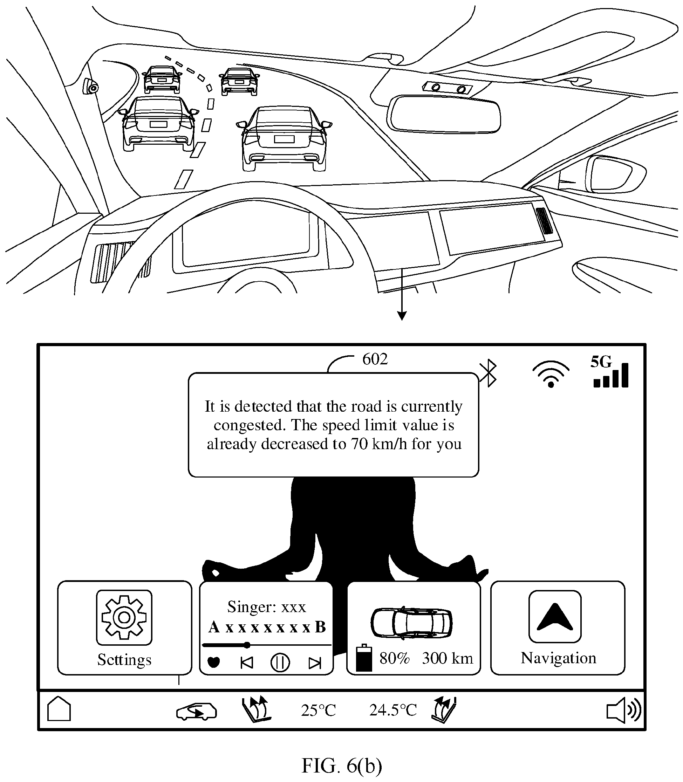

FIG. 6(a) and FIG. 6(b) show another group of GUIs according to an embodiment of this application.

As shown in FIG. 6(a), a vehicle is in an ultra power-saving mode, and the vehicle may adjust a speed limit value to 110 km/h when it is detected that the vehicle is on a highway and the road is smooth.

In an embodiment, when it is detected that the vehicle is on the highway and the road is smooth, the vehicle may adjust the speed limit value of the vehicle based on a speed limit value of the highway.

For example, if the speed limit value of the highway is 120 km/h, the vehicle may adjust the speed limit from 90 km/h to 110 km/h.

For another example, if the speed limit value of the highway is 100 km/h, the vehicle may adjust the speed limit from 90 km/h to 95 km/h.

In an embodiment, when it is detected that the vehicle is on the highway and the road is smooth, the speed limit value of the vehicle may be further adjusted based on a speed limit value of a lane that the vehicle is in.

For example, the vehicle travels on a one-way four-lane highway, where speed limit values of two lanes on the left side are 120 km/h, and speed limit values of two lanes on the right side are 100 km/h. In this case, when the vehicle is in the leftmost lane, the speed limit value may be adjusted from 90 km/h to 110 km/h. When the vehicle is in the rightmost lane, the speed limit value may be adjusted from 90 km/h to 95 km/h.

In embodiments of this application, the speed limit value of the vehicle can be increased when the road is smooth and the speed limit value of the road is greater than a current speed limit value of the vehicle. In this way, driving experience is better when the vehicle travels on the smooth road.

As shown in FIG. 6(b), a vehicle is in an ultra power-saving mode, and the vehicle may adjust a speed limit value to 70 km/h when it is detected that a road is currently congested.

In embodiments of this application, when the road is congested, the speed limit value of the vehicle can be decreased. This can avoid a power consumption waste caused by sharp acceleration or sharp deceleration by a user in a congested case, thereby helping increase a range of the vehicle.

The foregoing describes several groups of GUIs provided in embodiments of this application. With reference to the accompanying drawings, the following describes a speed limit value adjustment method and apparatus that are provided in embodiments of this application.

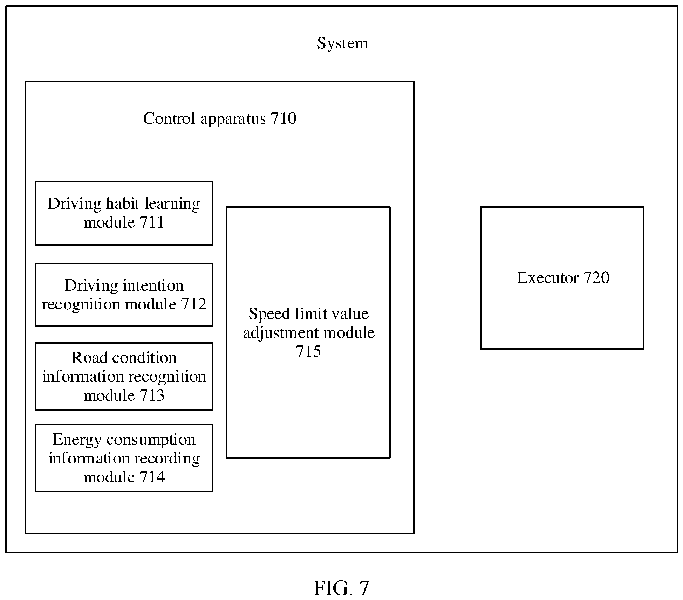

FIG. 7 is a block diagram of a system architecture according to an embodiment of this application. The system architecture includes a control apparatus 710 and an executor 720. The control apparatus 710 includes a driving habit learning module 711, a driving intention recognition module 712, a road condition information recognition module 713, an energy consumption information recording module 714, and a speed limit value adjustment module 715.

The control apparatus 710 may be a vehicle control unit (vehicle control unit, VCU), may be a system including a VCU and a cockpit domain controller (cockpit domain controller), may be a system including a VCU and a battery controller (for example, a battery management system (battery management system, BMS)), or may be a system including a VCU, a CDC, and a battery controller.

The foregoing control apparatus may be located in a vehicle, or may be located in a server. For example, the vehicle may send information about an accelerator pedal opening and/or an accelerator pedal opening change rate to the server, and the server determines whether the information about the accelerator pedal opening and/or the accelerator pedal opening change rate meet/meets a preset condition. If the preset condition is met, the server may send an instruction to the vehicle. The instruction indicate to adjust a speed limit value of the vehicle.

The control apparatus 710 may collect vehicle information. For example, information collection includes collecting a driving habit of a user, vehicle control information, road condition information, and energy consumption information. The control apparatus 710 may perform driving habit learning, driving intention learning, road condition information recognition, energy consumption information recording, and the like based on a result of information collection, to perform a dynamic limiting algorithm. Finally, the control apparatus 710 controls the executor to dynamically limit a speed.

The driving habit learning module 711 may record driving habits of the user in different road conditions (an urban area, a suburb, and a highway) and scenarios (smoothness and congestion) with reference to road information.

The driving intention recognition module 712 may recognize, based on the vehicle control information and the road condition information, a driving intention of the user, for example, an emergency acceleration intention shown when an accelerator is quickly stepped on.

The road condition information recognition module 713 may determine, based on currently collected road condition information (a road speed limit, map information, navigation information, and the like), a road condition that the user currently faces.

The energy consumption information recording module 714 may record historical energy consumption information of the user in the different road conditions and at different vehicle speeds, and update the historical energy consumption information in real time.

The speed limit value adjustment module 715 may dynamically adjust the speed limit value of the vehicle based on one or more of the driving habit, the road condition information, the driving intention, and the energy consumption information, and send, to the executor, the instruction for adjusting the speed limit value.

After receiving the instruction sent by the control apparatus 710, the executor 720 may execute the instruction for adjusting the speed limit value.

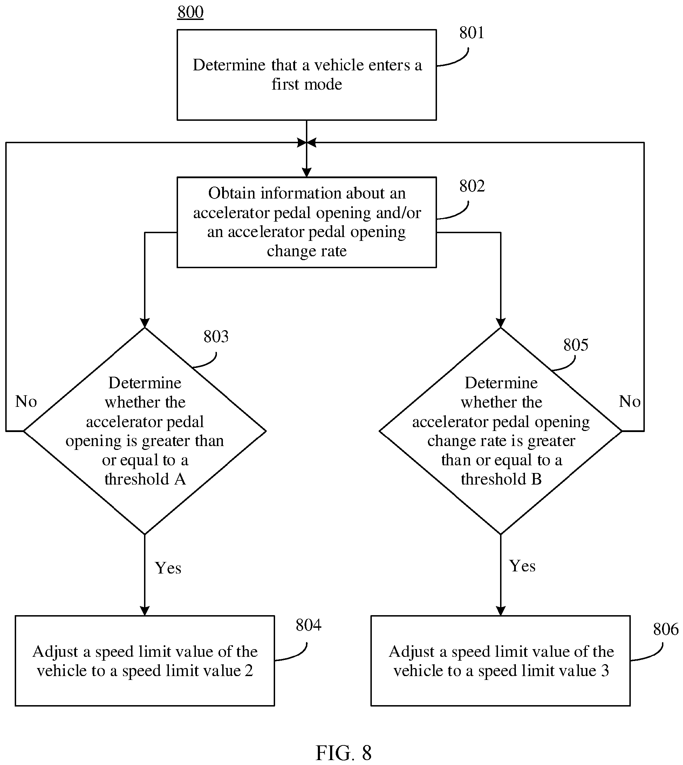

FIG. 8 is a schematic flowchart of a speed limit value adjustment method 800 according to an embodiment of this application. As shown in FIG. 8, the method may be performed by the foregoing control apparatus 710. The method 800 includes the following steps.

S801: Determine that a vehicle enters a first mode, where a speed limit value of the vehicle in the first mode is a speed limit value 1.

In an embodiment, the first mode may be an ECO mode or a power-saving mode.

In an embodiment, the first mode may be a sub-mode in the ECO mode or the power-saving mode.

For example, the first mode is a sub-mode 1 in the power-saving mode, or the first mode is a sub-mode 2 in the power-saving mode. For example, in the sub-mode 1, air conditioning or an atmosphere lamp can be allowed to be used. In the sub-mode 2, air conditioning or an atmosphere lamp cannot be used.

In an embodiment, the first mode may alternatively be a user-defined mode.

For example, the user may set that, in the first mode, the air conditioning, the atmosphere lamp, and a backseat entertainment screen may be used. For another example, the user may further set that, in the second mode, a backseat entertainment screen may be used, but the air conditioning and the atmosphere lamp cannot be used.

In an embodiment, the first mode may be a non-ECO mode or a non-power-saving mode.

For example, the first mode may be a sport mode or a comfort mode.

S802: Obtain information about an accelerator pedal opening and/or an accelerator pedal opening change rate.

For example, the control apparatus 710 may obtain the accelerator pedal opening and/or the accelerator pedal opening change rate by using information collected by an accelerator pedal opening sensor.

The accelerator pedal opening may range from 0 to 100%, where 0 is an opening obtained when it is not detected that a user presses an accelerator pedal, and 100% is an opening obtained when it is detected that a user furthest steps on an accelerator pedal.

The accelerator pedal opening change rate may be understood as an accelerator pedal opening change rate in a unit time. For example, if the accelerator pedal opening increases from $k_1$ to $k_2$ within duration $\Delta T$, the accelerator pedal opening change rate may be determined according to the following formula (1).

$$Roc = \frac{k_2 - k_1}{\triangle T} \quad (1)$$

Roc is the accelerator pedal opening change rate.

S803: Determine whether the accelerator pedal opening is greater than or equal to a threshold A.

For example, the threshold A may be 80%.

If the accelerator pedal opening is less than the threshold A, S802 may be returned to and performed.

S804: Adjust the speed limit value of the vehicle to a speed limit value 2 when the accelerator pedal opening is greater than or equal to the threshold A, where the speed limit value 2 is greater than the speed limit value 1.

The driving intention recognition module 712 in the control apparatus 710 may recognize, when the accelerator pedal opening is greater than or equal to the threshold A, that the user has an intention of emergency acceleration. Consequently, the speed limit value of the vehicle may be adjusted from the speed limit value 1 to the speed limit value 2.

In an embodiment, the adjusting the speed limit value of the vehicle to a speed limit value 2 when the accelerator pedal opening is greater than or equal to the threshold A includes: adjusting the speed limit value of the vehicle to the speed limit value 2 within preset duration when the accelerator pedal opening is greater than or equal to the threshold A.

In an embodiment, the method further includes: adjusting the speed limit value of the vehicle to the speed limit value 1 when the accelerator pedal opening is less than the threshold A.

S805: Determine whether the accelerator pedal opening change rate is greater than or equal to a threshold B.

If the opening change rate is less than the threshold B, S802 may be returned to and performed.

S806: Adjust the speed limit value of the vehicle to a speed limit value 3 when the accelerator pedal opening change rate is greater than or equal to the threshold B, where the speed limit value 3 is greater than the speed limit value 1.

It should be understood that S803 and S804, and S805 and S806 may be performed in parallel.

For example, the control apparatus 710 may compute the accelerator pedal opening change rate in a cycle of 1 second. In this way, when the opening change rate in a cycle is greater than or equal to the threshold B, the speed limit value may be adjusted to the speed limit value 3.

In an embodiment, the speed limit value 2 and the speed limit value 3 may be the same, or may be different.

In an embodiment, a timer may be started when the accelerator pedal opening change rate is greater than or equal to the threshold B. The speed limit value may be adjusted to the speed limit value 3 during the timer runs. When the timer expires, the speed limit value may be adjusted to the speed limit value 1.

In an embodiment, when the accelerator pedal opening change rate is less than the threshold B, the speed limit value of the vehicle may be adjusted to the speed limit value 1.

In an embodiment, the speed limit value of the vehicle may be adjusted to the speed limit value 1 when duration within which the accelerator pedal opening change rate is less than the threshold B is greater than or equal to preset duration.

In an embodiment, a speed of the vehicle may be adjusted from a current speed to the speed limit value 1 within preset duration.

For example, the control apparatus 710 may compute the accelerator pedal opening change rate in a cycle of 1 second. In this way, the timer (for example, duration of the timer is 10 seconds) may be started when the opening change rate in the cycle is greater than or equal to the threshold B. In this way, a relationship between the accelerator pedal opening change rate and the threshold B may not be determined within next 10 seconds, and the speed limit value may be adjusted to the speed limit value 3 within the 10 seconds. After the 10 seconds, the relationship between the accelerator pedal opening change rate and the threshold B may continue to be determined. If the accelerator pedal opening change rate is less than the threshold B, the speed limit value is adjusted to the speed limit value 3. If the accelerator pedal opening change rate is greater than or equal to the threshold B, the timer may continue to be started.

Alternatively, in a process of starting the timer, a relationship between the accelerator pedal opening change rate and the threshold B may continue to be determined. For example, the duration of the timer may be restarted from the 6th second if the accelerator pedal opening change rate is less than the threshold B within 0 to 5 seconds and it is detected at the 6th second that the accelerator pedal opening change rate is again greater than or equal to the threshold B. If the accelerator pedal opening change rate obtained during the timer runs is less than the threshold B, the speed limit value may be adjusted to the speed limit value 3 when the timer expires.

For example, the speed limit value 1 is 90 km/h. The control apparatus may adjust the speed limit value of the vehicle to 110 km/h when the speed of the vehicle is 80 km/h and the accelerator pedal opening is greater than or equal to 80%. In this way, the speed of the vehicle can be increased from 80 km/h to 105 km/h. When it is detected that the accelerator pedal opening is less than 80%, the control apparatus may decrease the speed limit value of the vehicle from 110 km/h to 90 km/h. In addition, the control apparatus may decrease the speed of the vehicle from 105 km/h to 90 km/h within the preset duration.

For example, the control apparatus may control the speed of the vehicle to decrease from 105 km/h to 90 km/h within 30 seconds or 1 minute.

For another example, the control apparatus may decrease the vehicle speed from 105 km/h to 90 km/h through a linear change or a curvilinear change.

For another example, the control apparatus may obtain, through table lookup, duration required to change the current vehicle speed to the speed limit value 1, to decrease the vehicle speed from the current vehicle speed to the speed limit value 1 within the duration.

In embodiments of this application, the speed limit value of the vehicle is adjusted from the current vehicle speed to the first speed limit value within the preset duration. This avoids impact caused by sharp deceleration to the user, and helps improve driving comfort of the user in a process of adjusting the speed limit value, thereby helping improve driving experience of the user.

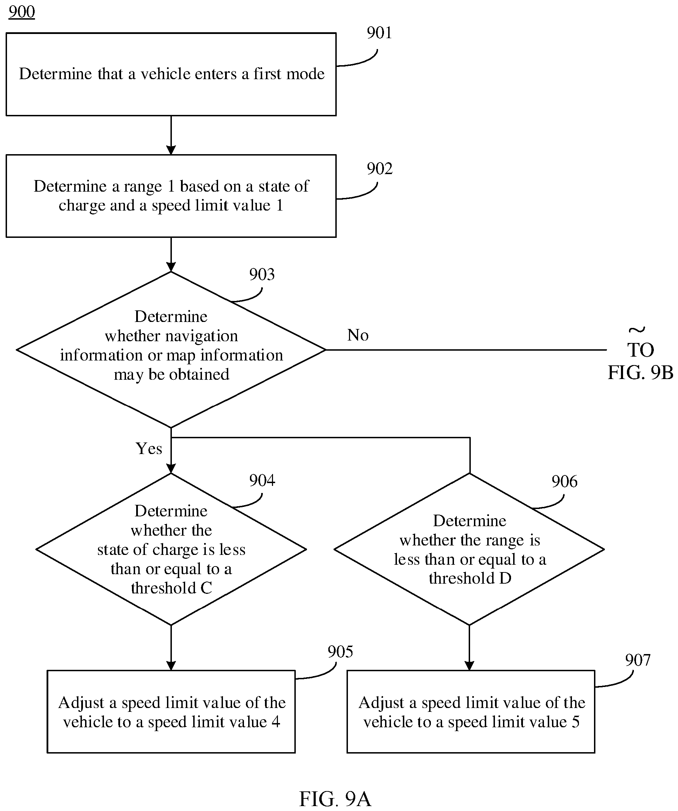

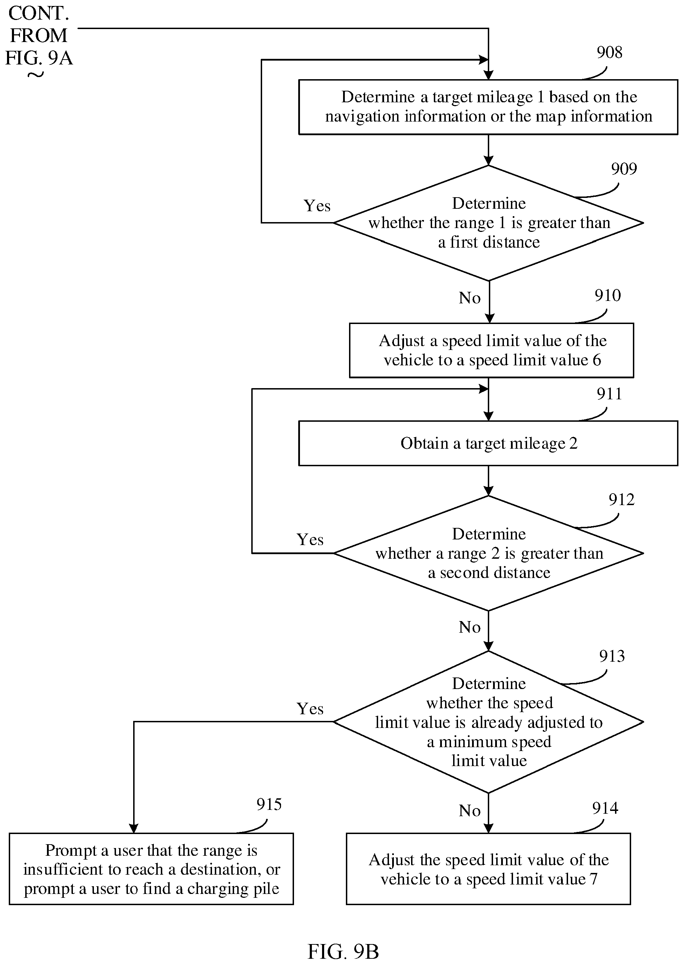

FIG. 9A and FIG. 9B are a schematic flowchart of a speed limit value adjustment method 900 according to an embodiment of this application. As shown in FIG. 9A and FIG. 9B, the method may be performed by the foregoing control apparatus 710. The method 90 includes the following steps.

S901: Determine that a vehicle enters a first mode, where a speed limit value of the vehicle in the first mode is a speed limit value 1.

For S901, refer to the descriptions of S801. Details are not described herein again.

S902: Determine a range 1 based on a state of charge and the speed limit value 1.

In an embodiment, the determining a range 1 based on a state of charge and the speed limit value 1 includes: determining the range 1 based on the state of charge, the speed limit value 1, and historical energy consumption information.

For example, the control apparatus 710 may predict the range 1 under the state of charge and the speed limit value 1 based on an estimation obtained from 100 km that the vehicle most recently travels. For example, the 100 km that the vehicle most recently travels based on the speed limit value 1 may be divided into sections, to separately compute energy consumption values during [0 km, 10 km), [10 km, 20 km), [20 km, 30 km), [30 km, 40 km), [40 km, 50 km), [50 km, 60 km), [60 km, 70 km), [70 km, 80 km), [80 km, 90 km), and [90 km, 100 km], and an average energy consumption value is computed based on these energy consumption values. The control apparatus 710 may determine the range 1 under the state of charge and the speed limit value 1 based on the average energy consumption value of the 100 km that the vehicle most recently travels based on the speed limit value 1.

For another example, the control apparatus 710 may alternatively compute a comprehensive energy consumption value of 100 km that the vehicle most recently travels based on the speed limit value 1. When the comprehensive energy consumption value is computed, weights of sections may be different. For example, a weight value of an energy consumption corresponding to each section in [0 km, 50 km) may be greater than a weight value of energy consumption corresponding to each section in [50 km, 100 km]. The control apparatus 710 may determine the range 1 under the state of charge and the speed limit value 1 based on the comprehensive energy consumption value of the 100 km that the vehicle most recently travels based on the speed limit value 1.

In an embodiment, the control apparatus 710 may determine the range 1 under the state of charge and the speed limit value 1 based on historical energy consumption information obtained when the vehicle travels on the route before.

For example, the control apparatus 710 may determine the range 1 under the state of charge and the speed limit value 1 based on an average energy consumption value obtained when the vehicle travels on the route five times before.

In an embodiment, the control apparatus 710 may alternatively predict the range 1 based on an average energy consumption in a mode 1. Average energy consumption in different modes may be obtained by adding average driving energy consumption per unit mileage and accessory power that are in the different modes. The average driving energy consumption per unit mileage may be read as a preset value based on test calibration data of a vehicle control unit in different modes and different working conditions (or a standard comprehensive working condition). The accessory energy consumption may be computed based on a sum of energy consumption (for example, power of accessories such as air conditioning, a central display screen, audio, lighting, and a seat) of all working accessories in the different modes.

S903: Determine whether navigation information or map information may be obtained.

For example, when the vehicle may receive the navigation information or the map information from a map server, it is determined that the navigation information or the map information may be obtained. Alternatively, when it is detected that a user enters the information about destination by using the central display screen and the navigation information may be obtained by using the map information locally stored in the vehicle, it is determined that the navigation information or the map information may be obtained.

For example, although the map information is locally stored in the vehicle or the vehicle may communicate with the map server, it is determined that the navigation information or the map information is not obtained if the vehicle does not detect, after being powered on, that the user starts a navigation application or does not detect, after the user starts a navigation application, an operation of entering the destination by the user.

S904 to 907 may be performed when the navigation information or the map information is not obtained. S908 to S913 may be performed when the navigation information or the map information is obtained.

S904: Determine whether the state of charge is less than or equal to a threshold C.

For example, the threshold C may be 10%.

When the state of charge is greater than the threshold C, S903 may be returned to and performed.

S905: When the state of charge is less than or equal to the threshold C, the speed limit value of the vehicle may be adjusted to a speed limit value 4, where the speed limit value 4 is less than the speed limit value 1.

For example, the speed limit value 4 is 70 km/h.

In embodiments of this application, when there is no navigation information or map information, the speed limit value of the vehicle may be adjusted to the speed limit value 4 if it is detected that the state of charge of the vehicle is less than the threshold C. The speed limit value of the vehicle is decreased. This can increase a range of the vehicle, and avoid a risk caused by an insufficient range to the user, thereby helping improve driving experience of the user.

S906: Determine whether the range is less than or equal to a threshold D.

For example, the threshold D may be 40 km.

When the range is greater than the threshold D, S903 may be returned to and performed.

S907: When the range is less than or equal to the threshold D, the speed limit value of the vehicle may be adjusted to a speed limit value 5, where the speed limit value 5 is less than the speed limit value 1.

For example, the speed limit value 5 is 70 km/h.

S904 and S905, and S906 and S907 may be performed in parallel.

In embodiments of this application, when there is no navigation information, the speed limit value of the vehicle may be adjusted to the speed limit value 5 if it is detected that the range of the vehicle is less than or equal to the threshold D. The speed limit value of the vehicle is decreased. This can increase the range of the vehicle, and avoid the risk caused by the insufficient range to the user, thereby helping improve driving experience of the user.

S908: When the navigation information or the map information may be obtained, determine a target mileage 1 based on the navigation information or the map information.

For example, the navigation information may be navigation information obtained by the vehicle from the map server. For example, the vehicle may send the information about the destination to the map server after the vehicle detects that the user enters the information about the destination by using an in-vehicle navigation application. The map server may plan, based on the destination, one or more travel routes from a current location of the vehicle to the destination and a target mileage corresponding to each travel route. The map server may send, to the vehicle, the one or more travel routes and information about the target mileage corresponding to the travel route. In this way, the vehicle may display, through the central display screen, the one or more travel routes and the target mileage corresponding to each travel route. When it is detected that the user selects a travel route from the one or more travel routes, the target mileage 1 may be determined based on the travel route.

In an embodiment, the vehicle may further send the information about the destination and the historical energy consumption information of the vehicle to the map server. In this way, the map server determines a more accurate target mileage based on the destination and the historical energy consumption information.

In an embodiment, the vehicle may alternatively receive information that is sent by an electronic device (for example, a mobile phone) and that is about a destination, a navigation route, and a target mileage 1.

In an embodiment, after detecting that the user enters the information about the destination by using the in-vehicle navigation application, the vehicle may plan one or more navigation routes for the user based on a map locally stored in the vehicle, and determine a target mileage corresponding to each navigation route. When it is detected that the user selects a travel route from the one or more travel routes, the target mileage 1 may be determined based on the travel route.

In the foregoing mode 1, the range 1 may be understood as a maximum mileage that the vehicle may travel in the mode 1, and the target mileage may be understood as a mileage that the vehicle is to travel, or may be understood as a mileage that the vehicle still needs to travel from the current location to the destination.

S909: Determine whether the range 1 is greater than a first distance.

The determining whether the range 1 is greater than a first distance may also be understood as determining whether the vehicle can reach the destination.

Optionally, the first distance may be the target travel distance 1, the first distance may be a sum of the target travel distance 1 and a preset distance value, or the first distance may be a product of the target travel distance 1 and a preset magnification.

When the range 1 is greater than the first distance, S908 may be returned to and performed.

S910: When the range 1 is less than or equal to the first distance, adjust the speed limit value of the vehicle to the speed limit value 6.

For example, the speed limit value 6 may be 70 km/h.

In an embodiment, when the range 1 is less than or equal to the first distance, the speed limit value 6 may be determined based on a difference between the first distance and the range 1.

For example, the speed limit value 6 may be 70 km/h if the difference between the first distance and the range 1 is greater than 20 km.

For example, the speed limit value 6 may be 60 km/h if the difference between the first distance and the range 1 is greater than 10 km and less than or equal to 20 km.

For example, the speed limit value 6 may be 50 km/h if the difference between the first distance and the range 1 is less than or equal to 10 km.

In an embodiment, a range of the vehicle under the state of charge and the speed limit value 6 is greater than the first distance. Alternatively, a range determined based on the state of charge, the speed limit value 6, and the historical energy consumption information is greater than the first distance.

S911: A target mileage 2 may be obtained in a process in which the vehicle travels based on the speed limit value 6.

In an embodiment, when it is detected an operation of changing the destination by the user, the vehicle may determine the target mileage 2 based on a changed destination.

In an embodiment, the vehicle may obtain the target mileage 2 when it is detected that the destination cannot be reached based on the speed limit value 6.

In an embodiment, after the speed limit value of the vehicle is adjusted to the speed limit value 6, the vehicle may obtain the target mileage 2 in real time, and compare the target mileage 2 with the range determined based on the state of charge and the speed limit value 6.

In an embodiment, the range 2 may be determined based on the state of charge and the speed limit value 6.

In an embodiment, the target mileage 2 may be determined based on the state of charge, the speed limit value 6, and historical energy consumption information.

For a process of determining the target mileage 2, refer to a process of determining the target mileage 1 in the foregoing embodiment. Details are not described herein again.

S912: Determine whether the range 2 is greater than a second distance.

For example, at a moment $t_1$, the vehicle determines that a range 1 under a state of charge 10% and a speed limit value 90 km/h is 45 km. The vehicle may adjust the speed limit value to 70 km/h when the range 1 is less than or equal to a first distance 45 km (for example, the first distance may be a sum of a target mileage 45 km and a fixed value 5 km). A range (for example) under the state of charge 10% and the speed limit value 70 km/h is greater than the first distance.

At a moment $t_2$, the vehicle determines that a range 2 under a state of charge 5% and the speed limit value 70 km/h is 35 km. The vehicle may adjust the speed limit value to 50 km/h when the range 2 is less than or equal to a second distance 35 km (for example, the second distance may be a sum of a target mileage 30 km and a fixed value 5 km). A range (for example, 45 km) under the state of charge 5% and the speed limit value 50 km/h is greater than the second distance.

The determining whether the range 2 is greater than a second distance may also be understood as determining whether the vehicle can reach the destination.

Optionally, the second distance may be the target travel distance 2, the second distance may be a sum of the target travel distance 2 and a preset distance value, or the second distance may be a product of the target travel distance 2 and a preset magnification.

When the range 2 is greater than the second distance, S911 may be returned to and performed.

S913: If the range 2 is less than or equal to the second distance, determine whether the speed limit value is already adjusted to a minimum speed limit value.

For example, the minimum speed limit value may be 50 km/h.

In an embodiment, if the range 2 is less than or equal to the second distance, when whether the speed limit value is already adjusted to the minimum speed limit value is determined, whether a range under the minimum speed limit value is greater than the second distance may be further determined. For example, if the speed limit value is already adjusted to the minimum speed limit value, and the range under the minimum speed limit value is less than or equal to the second distance, the user may be prompted that the range is insufficient to reach the destination, or the user may be prompted to search for a charging pile.

S914: If the speed limit value is not adjusted to the minimum speed limit value, the vehicle may continue to adjust the speed limit value of the vehicle to a speed limit value 7, where the speed limit value 7 is less than or equal to the speed limit value 6.

In an embodiment, a range under the speed limit value 7 is greater than the second distance.

In this way, when the vehicle is not yet adjusted to the minimum speed limit value, a range of the vehicle can be increased by further decreasing the speed limit value. This helps further reduce a risk caused by an insufficient range.

S915: If the speed limit value is already adjusted to the minimum speed limit value, prompt the user that the range is insufficient to reach the destination, or prompt the user to find the charging pile.

The target mileage may be determined with reference to the navigation information or the map information. Embodiments of this application are not limited thereto. When there is no navigation information or map information, the target mileage may alternatively be determined based on a historical travel record.

For example, after the vehicle is powered on, a current location of the vehicle (for example, the vehicle is currently located near an xx building) may be obtained by using a positioning system. The vehicle may determine, based on information about a subtotal mileage stored in the vehicle, a target mileage that the vehicle may need to travel when the vehicle departs from the xx building.

For another example, within one month, the vehicle departs 20 times from a start location that is the xx building, including 13 times that the destination is a home, five times that the destination is a restaurant A, and two times that the destination is a school A. In this case, the vehicle may predict that a destination of a current travel may be home. In this way, the vehicle may obtain a target mileage (for example, the target mileage is 40 km) from the xx building to the home based on the map information stored in the vehicle or the information about the subtotal mileage.

For another example, the vehicle may store, in a historical travel record, a quantity of times of traveling from the xx building to each destination, or the vehicle may store, in a historical mileage, a mileage of each departure from the xx building. For example, within one month, the vehicle departs 20 times from a start location that is the xx building, including 15 times that the vehicle travels a mileage that is 38 km to 40 km, three times that the vehicle travels a mileage that is 8 km to 10 km, and two times that the vehicle travels a mileage that is 60 km to 70 km. In this case, the vehicle may predict that the target mileage of the user is 40 km.

In an embodiment, a travel record obtained when the vehicle departs from a location in a preset time period may be further stored in the historical travel record. For example, Table 1 shows historical travel records of the vehicle within one month.

**Table 1: Historical travel records**

| Departure location | Time period | Mileage | Quantity of times |
|---|---|---|---|
| XX community | 7:00 AM to 9:00 AM | [28 km, 30 km] | 20 |
| | 11:00 AM to 1:00 PM | [10 km, 15 km] | 5 |
| | 9:00 PM to 11:00 PM | [40 km, 45 km] | 3 |
| XX building | 11:00 AM to 1:00 PM | [60 km, 70 km] | 2 |
| | 5:00 PM to 7:00 PM | [28 km, 30 km] | 20 |
| | 9:00 PM to 11:00 PM | [70 km, 75 km] | 6 |
| ... | ... | ... | ... |

It should be understood that data recorded in Table 1 is merely an example, and the historical travel record may include more or less data than that in the foregoing table. Embodiments of this application are not limited thereto.

For example, when a location at which the vehicle is powered on is the xx building, and a moment when the vehicle is powered on is 6:00 PM, the vehicle may predict, based on the historical travel record shown in Table 1, that the target mileage is 30 km. Alternatively, the target mileage is an average value (for example, an average value 29 km) of 20 mileages during 5:00 PM to 7:00 PM.

In an embodiment, a travel record obtained when the vehicle departs from a location in a preset time period may be further stored in the historical travel record. Table 2 shows other historical travel records of the vehicle within one month.

**Table 2: Historical travel records**

| Departure location | Time period | Mileage | Quantity of times |
|---|---|---|---|
| XX community | 7:00 AM to 9:00 AM, Monday to Friday | [28 km, 30 km] | 20 |
| | 7:00 AM to 9:00 AM, Saturday or Sunday | [40 km, 45 km] | 8 |
| | 11:00 AM to 1:00 PM, Monday to Sunday | [10 km, 15 km] | 5 |
| | 9:00 PM to 11:00 PM, Monday to Sunday | [40 km, 45 km] | 3 |
| XX building | 11:00 AM to 1:00 PM, Monday to Sunday | [60 km, 70 km] | 2 |
| | 5:00 PM to 7:00 PM, Monday to Thursday | [28 km, 30 km] | 20 |
| | 5:00 PM to 7:00 PM, Friday | [60 km, 65 km] | 4 |
| | 9:00 PM to 11:00 PM, Monday to Sunday | [70 km, 75 km] | 6 |
| ... | ... | ... | ... |

It should be understood that data recorded in Table 2 is merely an example, and the historical travel record may include more or less data than that in the foregoing table. Embodiments of this application are not limited thereto.

For example, when a location at which the vehicle is powered on is the xx building, and a moment when the vehicle is powered on is 6:00 PM on Friday, the vehicle may predict, based on the historical travel record shown in Table 2, that the target mileage is 65 km. Alternatively, the target mileage is an average value (for example, an average value 63 km) of four mileages during 5:00 PM to 7:00 PM.

In an embodiment, the historical travel record may further include identity information of the user.

For example, Table 3 shows other historical travel records of the vehicle within one month.

**Table 3: Historical travel records**

| User identity | Departure location | Time period | Mileage | Quantity of times |
|---|---|---|---|---|
| User A | XX community | 7:00 AM to 9:00 AM | [28 km, 30 km] | 20 |
| | | 11:00 AM to 1:00 PM | [10 km, 15 km] | 5 |
| | | 9:00 PM to 11:00 PM | [40 km, 45 km] | 3 |
| User A | XX building | 11:00 AM to 1:00 PM | [60 km, 70 km] | 2 |
| | | 5:00 PM to 7:00 PM | [28 km, 30 km] | 20 |
| | | 9:00 PM to 11:00 PM | [70 km, 75 km] | 6 |
| User B | XX community | 7:00 AM to 9:00 AM | [40 km, 45 km] | 10 |
| | | 11:00 AM to 1:00 PM | [15 km, 18 km] | 7 |
| | | 9:00 PM to 11:00 PM | [5 km, 10 km] | 3 |
| ... | ... | ... | ... | ... |

For example, when the vehicle is powered on, an image shooting apparatus (for example, a camera of a driver monitor system (driver monitor system, DMS) or a camera of a cabin monitor system (cabin monitor system, CMS)) in a cockpit may be used to collect image information of a driver area, and determines identity information of a user by using the image information. For example, a user in the driver area is a user B. If the current location of the vehicle is the xx community, and a moment at which the vehicle is powered on is 8:00 AM, the vehicle may predict, based on the historical travel record shown in Table 3, that the target mileage is 45 km. Alternatively, the target mileage is an average value (for example, an average value 43 km) of 10 mileages in a period from 7:00 AM to 9:00 AM.

In embodiments of this application, when the vehicle cannot obtain the navigation information, the first distance can alternatively be determined with reference to one or more mileages obtained when the vehicle departs from the location in the preset time period. In this way, the vehicle can obtain more accurate information about the first distance. This helps further reduce the risk caused by the insufficient range, thereby helping improve driving experience of the user.

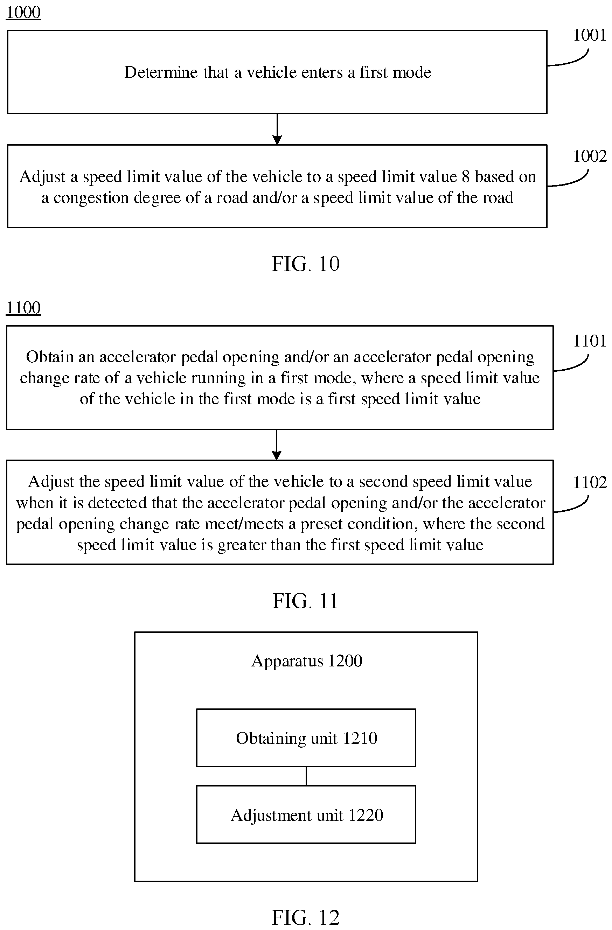

FIG. 10 is a schematic flowchart of a speed limit value adjustment method 1000 according to an embodiment of this application. As shown in FIG. 10, the method 1000 includes the following steps.

S1001: Determine that a vehicle enters a first mode, where a speed limit value of the vehicle in the first mode is a speed limit value 1.

For S1001, refer to the descriptions of S801. Details are not described herein again.

S1002: Adjust the speed limit value of the vehicle to a speed limit value 8 based on a congestion degree of a road and/or a speed limit value of the road.

In an embodiment, the vehicle may adjust the speed limit value to the speed limit value 8 if the speed limit value of the road that the vehicle is on is 60 km/h and the speed limit value of the road is less than the speed limit value 1. The speed limit value 8 is less than the speed limit value of the road.

In an embodiment, the adjusting the speed limit value of the vehicle to a speed limit value 8 based on a congestion degree of a road and/or a speed limit value of the road includes: adjusting the speed limit value of the vehicle to the speed limit value 8 when the road is smooth and the speed limit value 1 is less than the speed limit value of the road. The speed limit value 8 is greater than the speed limit value 1.

For example, the speed limit value of the road may be 100 km/h, and the speed limit value 8 may be 100 km/h.

For example, the speed limit value of the road may be 120 km/h, and the speed limit value 8 may be 110 km/h.

In an embodiment, the speed limit value of the vehicle to a speed limit value 8 based on a congestion degree of a road and/or a speed limit value of the road includes: when it is detected that the vehicle is on a first-type road, adjusting the speed limit value of the vehicle to the speed limit value 8 based on the congestion degree of the road and/or the speed limit value of the road. The first-type road includes an expressway, an urban road, or a suburban road.

For example, when it is detected that the vehicle is on the highway, the speed limit value of the vehicle may be adjusted to the speed limit value 8 if the road is smooth and the speed limit value 1 is less than a speed limit value of the highway. When it is detected that the vehicle is on the suburban road, the speed limit value of the vehicle may be kept at the speed limit value 1 if the road is smooth and the speed limit value 1 is less than a speed limit value of the suburban road.

In an embodiment, the vehicle may determine, based on navigation information or map information, a type of the road that the vehicle is on.

In an embodiment, the vehicle may alternatively determine, based on an image collected by a sensor (for example, a surround-view camera outside the vehicle), a type of the road that the vehicle is on.

In an embodiment, the adjusting the speed limit value of the vehicle to a speed limit value 9 based on a congestion degree of a road and/or a speed limit value of the road includes: when the road is congested, adjusting the speed limit value of the vehicle to the speed limit value 9. The speed limit value 9 is less than the speed limit value 1.

In an embodiment, the congestion degree of the road may be determined based on the navigation information and/or a historical travel record.

For example, when the navigation information shows that a road section is congested 10 km ahead the vehicle, the speed limit value of the vehicle may be adjusted to the speed limit value 9 at a place 1 km from the congested road section. This can avoid a power consumption waste caused by sharp deceleration of the vehicle in a place close to the congested road can be avoided, and help increase a range of the vehicle.

For another example, when a route on which the vehicle travels is in an urban area, the vehicle may determine, with reference to information about an average vehicle speed on the route stored in the historical travel record, whether to adjust the speed limit value 1 to the speed limit value 9. For example, if an average vehicle speed obtained when the vehicle travels on the route five previous times is 30 km/h, it may be considered that congestion occurs when the vehicle travels on the route. In this case, the speed limit value may be adjusted to the speed limit value 9.

In an embodiment, the speed limit value 9 may be determined based on the historical average vehicle speed.

For example, the speed limit value 9 may be 60 km/h if the vehicle travels on a route on which a historical average speed is 30 km/h to 50 km/h.

For another example, the speed limit value 9 may be 70 km/h if the vehicle travels on a route on which a historical average speed is 50 km/h to 60 km/h.

In an embodiment, the speed limit value 9 may be determined based on the congestion degree of the road.

For example, the speed limit value 9 may be 50 km/h when the navigation information shows that a road section ahead is seriously congested.

For another example, the speed limit value 9 may be 70 km/h when the navigation information shows that a road section ahead is generally congested.

In embodiments of this application, the speed limit value may be decreased when it is determined that the road is congested. This avoids an energy consumption waste caused by sharp acceleration or sharp deceleration by the user, helps increase the range of the vehicle, avoids the risk caused by the insufficient range, and helps improve driving experience of the user.

The embodiments shown in FIG. 8 to FIG. 10 may be combined with each other.

For example, when it is detected that the range 1 is less than or equal to the first distance, the speed limit value may be decreased from 90 km/h to 70 km/h. In a process of traveling only at the speed limit value 70 km/h, the speed limit value may be increased from 70 km/h to 120 km/h if it is detected that the accelerator pedal opening is greater than the threshold A. The speed limit value may be decreased from 120 km/h to 70 km/h when it is detected that the accelerator pedal opening is less than the threshold A. In this way, when the range is insufficient and it is detected that the user has an intention of emergency acceleration, the speed limit value can be increased based on a safety priority principle. This ensures room for speed-up of the vehicle, and helps improve safety of the vehicle in an emergency.

For another example, when the vehicle travels on the highway, if it is detected that congestion occurs 10 km ahead, the speed limit value of the vehicle may be adjusted from 90 km/h to 70 km/h at a place 1 km away from the congested road section. In a process of traveling only at the speed limit value 70 km/h, the speed limit value may be increased from 70 km/h to 120 km/h within 20 seconds if it is detected that the accelerator pedal opening change rate is greater than the threshold B. After 20 seconds, the speed limit value may be decreased from 120 km/h to 70 km/h. In this way, when the range is insufficient and it is detected that the user has an intention of emergency acceleration, the speed limit value can be increased based on a safety priority principle. This ensures room for speed-up of the vehicle, and helps improve safety of the vehicle in an emergency.

FIG. 11 is a schematic flowchart of a speed limit value adjustment method 1100 according to an embodiment of this application. As shown in FIG. 11, the method 1100 includes the following steps.

S1101: Obtain an accelerator pedal opening and/or an accelerator pedal opening change rate of a vehicle running in a first mode, where a speed limit value of the vehicle in the first mode is a first speed limit value.

For S1101, refer to the descriptions of the embodiment in FIG. 8. Details are not described herein again.

For example, the first speed limit value is 90 km/h.

S1102: Adjust the speed limit value of the vehicle to a second speed limit value when it is detected that the accelerator pedal opening and/or the accelerator pedal opening change rate meet/meets a preset condition, where the second speed limit value is greater than the first speed limit value.

In an embodiment of this application, the preset condition may include a correspondence between a quantity of times that the accelerator pedal opening is greater than P% within preset duration and a quantity of triggering times n. For example, Table 4 shows a correspondence between the quantity of times that the accelerator pedal opening is greater than P% in the preset duration, the quantity n of triggering times, and whether to adjust the speed limit value.

**Table 4**

| Driving action | Preset duration | Quantity of triggering times | Whether to adjust the speed limit value |
|---|---|---|---|
| Accelerator pedal opening≥P% | $T_1$ | n | Yes |
| | $T_2$ | 2.5n | Yes |
| | $T_2$ | 5n | Yes |

As shown in Table 4, in a time period whose preset duration is $T_1$, a quantity of times that an opening of an accelerator pedal actually stepped on by a driver is greater than P% is greater than or equal to n. In this case, the speed limit value may be adjusted to the second speed limit value. In a time period whose preset duration is $T_2$, a quantity of times that an opening of an accelerator pedal actually stepped on by a driver is greater than P% is greater than or equal to 2.5n. In this case, the speed limit value may be adjusted to the second speed limit value. In a time period whose preset duration is $T_3$, a quantity of times that an opening of an accelerator pedal actually stepped on by a driver is greater than P% is greater than or equal to 5n. In this case, the speed limit value may be adjusted to the second speed limit value.

For example, the adjusted speed limit value may be further determined based on the quantity of times that the accelerator pedal opening is greater than P% within the preset duration. Table 5 shows a correspondence between a quantity of times that the accelerator pedal opening is greater than 70% within 60 seconds and the second speed limit value.

**Table 5**

| Driving action | Preset duration (s) | Quantity of triggering times (times) | Second speed limit value |
|---|---|---|---|
| Accelerator pedal opening>70% | 60s | 2 | 100 km/h |
| | 60s | 5 | 110 km/h |
| | 60s | 10 | 120 km/h |

Data in Table 4 and data in Table 5 are merely examples.

Optionally, the adjusting the speed limit value of the vehicle to a second speed limit value when it is detected that the accelerator pedal opening and/or the accelerator pedal opening change rate meet/meets a preset condition includes: adjusting the speed limit value of the vehicle to the second speed limit value when it is detected that the accelerator pedal opening is greater than or equal to a first threshold; and/or adjusting the speed limit value of the vehicle to the second speed limit value when it is detected that the accelerator pedal opening change rate is greater than or equal to a second threshold.

For the foregoing process of adjusting the speed limit value based on the accelerator pedal opening and/or the accelerator pedal opening change rate, refer to the descriptions in the method 800. Details are not described herein again.

Optionally, the method further includes: when the speed limit value of the vehicle is adjusted to the second speed limit value, prompting a user that the speed limit value is already adjusted to the second speed limit value.

Optionally, the adjusting the speed limit value of the vehicle to the second speed limit value includes: adjusting the speed limit value of the vehicle to the second speed limit value based on a difference between the accelerator pedal opening and the first threshold.

For example, the first threshold is 70%. If the accelerator pedal opening is 80%, the speed limit value may be adjusted to 110 km/h.

For example, the first threshold is 70%. If the accelerator pedal opening is 90%, the speed limit value may be adjusted to 120 km/h.

Optionally, the adjusting the speed limit value of the vehicle to the second speed limit value includes: adjusting the speed limit value of the vehicle to the second speed limit value based on the accelerator pedal opening change rate.

Optionally, the adjusting the speed limit value of the vehicle to the second speed limit value when it is detected that the accelerator pedal opening change rate is greater than or equal to a second threshold includes: when it is detected that the accelerator pedal opening change rate is greater than or equal to the second threshold, adjusting the speed limit value of the vehicle to the second speed limit value within first preset duration.

Optionally, the method further includes: adjusting the speed limit value of the vehicle to the first speed limit value when it is detected that the accelerator pedal opening is less than or equal to the first threshold; and/or adjusting the speed limit value of the vehicle to the first speed limit value when it is detected that duration within which the accelerator pedal opening change rate is less than or equal to the second threshold is greater than or equal to second preset duration.

Optionally, the method further includes: when the speed limit value of the vehicle is adjusted to the first speed limit value, prompting the user that the speed limit value is already adjusted to the first speed limit value.

Optionally, the adjusting the speed limit value of the vehicle to the first speed limit value includes: adjusting, within third preset duration, a vehicle speed of the vehicle from a current vehicle speed to the first speed limit value.

For example, the adjusting a vehicle speed of the vehicle from a current vehicle speed to the first speed limit value includes: adjusting the vehicle speed of the vehicle from the current vehicle speed to the first speed limit value through linear or curvilinear deceleration.

For example, the adjusting a vehicle speed of the vehicle from a current vehicle speed to the first speed limit value includes: adjusting the vehicle speed of the vehicle from the current vehicle speed to the first speed limit value through table lookup.

Optionally, the method further includes: adjusting the speed limit value of the vehicle to a third speed limit value when it is detected that a state of charge of the vehicle is less than or equal to a third threshold and/or a range corresponding to the state of charge is less than or equal to a fourth threshold. The first speed limit value is greater than the third speed limit value.

Optionally, the method further includes: when the speed limit value of the vehicle is adjusted to the third speed limit value, prompting the user that the speed limit value is already adjusted to the third speed limit value.

For the foregoing process of adjusting, when there is no navigation information, the speed limit value based on the state of charge and/or the range, refer to the descriptions in the method 900. Details are not described herein again.

Optionally, the method further includes: obtaining a first target mileage of the vehicle; determining a first range based on a first state of charge of the vehicle and the first speed limit value; and adjusting the speed limit value of the vehicle to a third speed limit value when the first range is less than or equal to a first distance. The first distance is determined based on the first target mileage, and the first speed limit value is greater than the third speed limit value.

Optionally, the obtaining a first target mileage of the vehicle includes: obtaining the first target mileage based on navigation information; or receiving information that is sent by a map server and that is about the first target mileage; or; receiving information that is sent by an electronic device (for example, a mobile phone) and that is about the first target mileage.

Optionally, the method further includes: obtaining a second target mileage of the vehicle; determining a second range based on a second state of charge of the vehicle and the third speed limit value; and adjusting the speed limit value of the vehicle to a fourth speed limit value when the second range is less than or equal to a second distance. The second distance is determined based on the second target mileage, and the third speed limit value is greater than the fourth speed limit value.

Optionally, when the vehicle still cannot travel to a destination or cannot complete a travel task based on a minimum speed limit value, the user is prompted to charge the vehicle immediately.

For the foregoing process of adjusting, when there is navigation information, the speed limit value based on the range and the target mileage, refer to the descriptions in the method 900. Details are not described herein again.

Optionally, the method further includes: when it is detected that the vehicle is on a first-type road, adjusting the speed limit value of the vehicle to a fifth speed limit value based on a congestion degree of the road and/or a speed limit value of the road. The first-type road includes a highway, an urban road, or a suburban road.

Optionally, the method further includes: determining the congestion degree of the road based on navigation information and/or a historical travel record obtained when the vehicle travels on the road.

For example, the congestion degree of the road may include three levels: The road is not congested (or, the road is smooth), the road is generally congested, and the road is particularly congested. The congestion degree of the road may be determined based on the navigation information.

For example, when the road is the highway, it may be determined, if the navigation information shows that an average vehicle speed of another vehicle passing through the road is greater than 90 km/h, that the congestion degree of the road is that the road is not congested. It may be determined, if the navigation information shows that an average vehicle speed of another vehicle passing through the road is less than 90 km/h and greater than 50 km/h, that the congestion degree of the road is that the road is generally congested. It may be determined, if the navigation information shows that an average vehicle speed of another vehicle passing through the road is less than 50 km/h, that the congestion degree of the road is that the road is particularly congested.

For another example, when the road is the suburban road, it may be determined, if the navigation information shows that an average vehicle speed of another vehicle passing through the road is greater than 70 km/h, that the congestion degree of the road is that the road is not congested. It may be determined, if the navigation information shows that an average vehicle speed of another vehicle passing through the road is less than 70 km/h and greater than 30 km/h, that the congestion degree of the road is that the road is generally congested. It may be determined, if the navigation information shows that an average vehicle speed of another vehicle passing through the road is less than 30 km/h, that the congestion degree of the road is that the road is particularly congested.

For another example, the road is an urban road. It may be determined, if an average vehicle speed obtained when the vehicle travels on the road in the historical travel record is greater than 60 km/h, that the congestion degree of the road is that the road is not congested. It may be determined, if an average vehicle speed obtained when the vehicle travels on the road in the historical travel record is less than 60 km/h and greater than 20 km/h, that the congestion degree of the road is that the road is generally congested. It may be determined, if an average vehicle speed obtained when the vehicle travels on the road in the historical travel record is less than 20 km/h, that the congestion degree of the road is that the road is particularly congested.

Optionally, the adjusting the speed limit value of the vehicle to a fifth speed limit value based on a congestion degree of the road and/or a speed limit value of the road includes: adjusting the speed limit value of the vehicle to the fifth speed limit value when the road is smooth and the speed limit value of the road is greater than the first speed limit value. The fifth speed limit value is greater than the first speed limit value.

Optionally, the adjusting the speed limit value of the vehicle to a fifth speed limit value based on a congestion degree of the road and/or a speed limit value of the road includes: when the road is congested, adjusting the speed limit value of the vehicle to the fifth speed limit value. The fifth speed limit value is less than the first speed limit value.

For the foregoing process of adjusting the speed limit value based on the congestion degree of the road and/or the speed limit value of the road, refer to the method 1000. Details are not described herein again.

Optionally, the first mode is an ECO mode or a power-saving mode.

An embodiment of this application further provides an apparatus configured to implement any one of the foregoing methods, for example, provides an apparatus, including a unit (or means) configured to implement the steps performed by the control apparatus, the vehicle, or the server in any one of the foregoing methods.

FIG. 12 is a block diagram of a speed limit value adjustment apparatus according to an embodiment of this application. As shown in FIG. 12, the apparatus 1200 includes: an obtaining unit 1210, configured to obtain an accelerator pedal opening and/or an accelerator pedal opening change rate of a vehicle running in a first mode, where a speed limit value of the vehicle in the first mode is a first speed limit value; and an adjustment unit 1220, configured to adjust the speed limit value of the vehicle to a second speed limit value when the accelerator pedal opening and/or the accelerator pedal opening change rate meet/meets a preset condition. The second speed limit value is greater than the first speed limit value.

Optionally, the adjustment unit 1220 is specifically configured to: adjust the speed limit value of the vehicle to the second speed limit value when it is detected that the accelerator pedal opening is greater than or equal to a first threshold; and/or adjust the speed limit value of the vehicle to the second speed limit value when it is detected that the accelerator pedal opening change rate is greater than or equal to a second threshold.

Optionally, the adjustment unit 1220 is specifically configured to adjust the speed limit value of the vehicle to the second speed limit value within first preset duration when it is detected that the accelerator pedal opening change rate is greater than or equal to the second threshold.

Optionally, the adjustment unit 1220 is further configured to: adjust the speed limit value of the vehicle to the first speed limit value when the accelerator pedal opening is less than or equal to the first threshold; and/or adjust the speed limit value of the vehicle to the first speed limit value when duration within which the accelerator pedal opening change rate is less than or equal to the second threshold is greater than or equal to second preset duration.

Optionally, the adjustment unit 1220 is specifically configured to adjust, within third preset duration, the speed limit value of the vehicle from the second speed limit value to the first speed limit value.

Optionally, the adjustment unit 1220 is further configured to adjust the speed limit value of the vehicle to a third speed limit value when a state of charge of the vehicle is less than or equal to a third threshold and/or a range corresponding to the state of charge is less than or equal to a fourth threshold. The first speed limit value is greater than the third speed limit value.

Optionally, the apparatus further includes a determining unit. The obtaining unit 1210 is further configured to obtain a first target mileage of the vehicle. The determining unit is configured to determine a first range based on a first state of charge of the vehicle and the first speed limit value. The adjustment unit 1220 is further configured to adjust the speed limit value of the vehicle to a third speed limit value when the first range is less than or equal to a first distance. The first distance is determined based on the first target mileage, and the first speed limit value is greater than the third speed limit value.

Optionally, the obtaining unit 1210 is further configured to obtain a second target mileage of the vehicle. The determining unit is further configured to determine a second range based on a second state of charge of the vehicle and the third speed limit value. The adjustment unit 1220 is further configured to adjust the speed limit value of the vehicle to a fourth speed limit value when the second range is less than or equal to a second distance. The second distance is determined based on the second target mileage, and the third speed limit value is greater than the fourth speed limit value.

Optionally, the obtaining unit 1210 is specifically configured to: obtain the second target mileage when a user switches a destination; or obtain the second target mileage when a destination cannot be reached based on the third speed limit value.

Optionally, the obtaining unit 1210 is specifically configured to: receive information about the first target mileage; or when the user enters the destination, obtain the first target mileage based on the destination; or obtain the first target mileage based on a historical travel record.

Optionally, the determining unit is specifically configured to determine the first range based on the first state of charge of the vehicle, the first speed limit value, and historical energy consumption information of the vehicle.

Optionally, the adjustment unit 1220 is further configured to: when the vehicle is on a first-type road, adjust the speed limit value of the vehicle to a fifth speed limit value based on a congestion degree of the road and/or a speed limit value of the road.

The first-type road includes a highway, an urban road, or a suburban road.

Optionally, the adjustment unit 1220 is specifically configured to adjust the speed limit value of the vehicle to the fifth speed limit value when the road is smooth and the speed limit value of the road is greater than the first speed limit value. The fifth speed limit value is greater than the first speed limit value.

Optionally, the adjustment unit 1220 is specifically configured to when the road is congested, adjust the speed limit value of the vehicle to the fifth speed limit value. The fifth speed limit value is less than the first speed limit value.

Optionally, the first mode is an ECO mode or a power-saving mode.

It should be understood that division into the units of the foregoing apparatus is merely logical function division. During actual implementation, all or some of the units may be integrated into a physical entity, or may be physically separated. In addition, the units in the apparatus may be implemented in a form of invoking software by a processor. For example, the apparatus includes the processor. The processor is connected to a memory. The memory stores instructions. The processor invokes the instructions stored in the memory, to implement any one of the foregoing methods or implement a function of each unit of the apparatus. For example, the processor is a general-purpose processor, for example, a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC. Functions of some or all of the foregoing units are implemented by designing a logical relationship between elements in the circuit. For another example, in another implementation, the hardware circuit may be implemented by a PLD. An FPGA is used as an example. The FPGA may include a large quantity of logic gate circuits. A configuration file is used to configure a connection relationship between the logic gate circuits, to implement functions of some or all of the units. All the units of the apparatus may be implemented in the form of invoking the software by the processor, or may be implemented in the form of the hardware circuit, or some of the units may be implemented in the form of invoking the software by the processor, and a remaining part may be implemented in the form of the hardware circuit.

In embodiments of this application, the processor is a circuit that has a signal processing capability. In an implementation, the processor may be a circuit that has an instruction reading and running capability, for example, a CPU, a microprocessor, a GPU, or a DSP. In another implementation, the processor may implement a function by using the logical relationship of the hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated, or may be implemented independently. In an implementation, these units are integrated and implemented in a form of a SOC. The SOC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, to enable the apparatus to perform the method or steps performed in the foregoing embodiment.

Optionally, if the apparatus is located in a vehicle, the processing unit may be the processors 151 to 15n shown in FIG. 1.

An embodiment of this application further provides a transport means. The transport vehicle may include the apparatus 710 or the apparatus 1200.

Optionally, the transport means may be a vehicle.

An embodiment of this application further provides a server. The server may include the apparatus 710 or the apparatus 1200.

An embodiment of this application further provides a computer program product. The computer program product includes computer program code. When the computer program code is run on a computer, the computer is enabled to perform the foregoing methods.

An embodiment of this application further provides a computer-readable medium. The computer-readable medium stores program code. When the computer program code is run on a computer, the computer is enabled to perform the foregoing methods.

In an implementation process, the steps in the foregoing methods may be implemented by using a hardware integrated logical circuit in a processor or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and completes the steps in the foregoing methods in combination with hardware of the processor. To avoid repetition, details are not described herein again.

It should be understood that, in embodiments of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, units and algorithm steps in the examples described with reference to embodiments disclosed in this specification can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

The functions may be stored in a computer-readable storage medium, when the functions are implemented in the form of a software functional unit and sold or used as an independent product. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A speed limit value adjustment method, comprising:

obtaining an accelerator pedal opening and/or an accelerator pedal opening change rate of a vehicle running in a first mode, wherein a speed limit value of the vehicle in the first mode is a first speed limit value; and

adjusting the speed limit value of the vehicle to a second speed limit value when it is detected that the accelerator pedal opening and/or the accelerator pedal opening change rate meet/meets a preset condition, wherein the second speed limit value is greater than the first speed limit value.

2. The method according to claim 1, wherein the adjusting the speed limit value of the vehicle to a second speed limit value when it is detected that the accelerator pedal opening and/or the accelerator pedal opening change rate meet/meets a preset condition comprises:

adjusting the speed limit value of the vehicle to the second speed limit value when it is detected that the accelerator pedal opening is greater than or equal to a first threshold; and/or
adjusting the speed limit value of the vehicle to the second speed limit value when it is detected that the accelerator pedal opening change rate is greater than or equal to a second threshold.

3. The method according to claim 2, wherein the adjusting the speed limit value of the vehicle to the second speed limit value when it is detected that the accelerator pedal opening change rate is greater than or equal to a second threshold comprises:
adjusting the speed limit value of the vehicle to the second speed limit value within first preset duration when it is detected that the accelerator pedal opening change rate is greater than or equal to the second threshold.

4. The method according to claim 2 or 3, wherein the method further comprises:

adjusting the speed limit value of the vehicle to the first speed limit value when it is detected that the accelerator pedal opening is less than or equal to the first threshold; and/or
adjusting the speed limit value of the vehicle to the first speed limit value when it is detected that duration within which the accelerator pedal opening change rate is less than or equal to the second threshold is greater than or equal to second preset duration.

5. The method according to claim 4, wherein the adjusting the speed limit value of the vehicle to the first speed limit value comprises:
adjusting, within third preset duration, a vehicle speed of the vehicle from a current vehicle speed to the first speed limit value.

6. The method according to any one of claims 1 to 5, wherein the method further comprises:

adjusting the speed limit value of the vehicle to a third speed limit value when it is detected that a state of charge of the vehicle is less than or equal to a third threshold and/or a range corresponding to the state of charge is less than or equal to a fourth threshold, wherein
the first speed limit value is greater than the third speed limit value.

7. The method according to any one of claims 1 to 5, wherein the method further comprises:

obtaining a first target mileage of the vehicle;
determining a first range based on a first state of charge of the vehicle and the first speed limit value; and
adjusting the speed limit value of the vehicle to a third speed limit value when the first range is less than or equal to a first distance, wherein
the first distance is determined based on the first target mileage, and the first speed limit value is greater than the third speed limit value.

8. The method according to claim 7, wherein the method further comprises:

obtaining a second target mileage of the vehicle;
determining a second range based on a second state of charge of the vehicle and the third speed limit value; and
adjusting the speed limit value of the vehicle to a fourth speed limit value when the second range is less than or equal to a second distance, wherein
the second distance is determined based on the second target mileage, and the third speed limit value is greater than the fourth speed limit value.

9. The method according to claim 8, wherein the obtaining a second target mileage of the vehicle comprises:

obtaining the second target mileage when an operation of switching a destination by a user is detected; or
obtaining the second target mileage when a destination cannot be reached based on the third speed limit value.

10. The method according to any one of claims 7 to 9, wherein the obtaining a first target mileage comprises:

receiving information about the first target mileage; and
obtaining the first target mileage when an operation of entering a destination by the user is detected; or
obtaining the first target mileage based on a historical travel record.

11. The method according to any one of claims 7 to 10, wherein the determining a first range based on a first state of charge of the vehicle and the first speed limit value comprises:
determining the first range based on the first state of charge of the vehicle, the first speed limit value, and historical energy consumption information of the vehicle.

12. The method according to any one of claims 1 to 11, wherein the method further comprises:

when it is detected that the vehicle is on a first-type road, adjusting the speed limit value of the vehicle to a fifth speed limit value based on a congestion degree of the road and/or a speed limit value of the road, wherein the first-type road comprises a highway, an urban road, or a suburban road.

13. The method according to claim 12, wherein the adjusting the speed limit value of the vehicle to a fifth speed limit value based on a congestion degree of the road and/or a speed limit value of the road comprises:
adjusting the speed limit value of the vehicle to the fifth speed limit value when the road is smooth and the speed limit value of the road is greater than the first speed limit value, wherein the fifth speed limit value is greater than the first speed limit value.

14. The method according to claim 12, wherein the adjusting the speed limit value of the vehicle to a fifth speed limit value based on a congestion degree of the road and/or a speed limit value of the road comprises:
when the road is congested, adjusting the speed limit value of the vehicle to the fifth speed limit value, wherein the fifth speed limit value is less than the first speed limit value.

15. The method according to any one of claims 1 to 14, wherein the first mode is an ECO mode or a power-saving mode.

16. A speed limit value adjustment apparatus, comprising:

an obtaining unit, configured to obtain an accelerator pedal opening and/or an accelerator pedal opening change rate of a vehicle running in a first mode, wherein a speed limit value of the vehicle in the first mode is a first speed limit value; and
an adjustment unit, configured to adjust the speed limit value of the vehicle to a second speed limit value when the accelerator pedal opening and/or the accelerator pedal opening change rate meet/meets a preset condition, wherein
the second speed limit value is greater than the first speed limit value.

17. The apparatus according to claim 16, wherein the adjustment unit is specifically configured to:

adjust the speed limit value of the vehicle to the second speed limit value when it is detected that the accelerator pedal opening is greater than or equal to a first threshold; and/or
adjust the speed limit value of the vehicle to the second speed limit value when it is detected that the accelerator pedal opening change rate is greater than or equal to a second threshold.

18. The apparatus according to claim 17, wherein the adjustment unit is specifically configured to:
adjust the speed limit value of the vehicle to the second speed limit value within first preset duration when it is detected that the accelerator pedal opening change rate is greater than or equal to the second threshold.

19. The apparatus according to claim 17 or 18, wherein

EP 4 534 326 A1

the adjustment unit is further configured to: adjust the speed limit value of the vehicle to the first speed limit value when the accelerator pedal opening is less than or equal to the first threshold; and/or
adjust the speed limit value of the vehicle to the first speed limit value when duration within which the accelerator pedal opening change rate is less than or equal to the second threshold is greater than or equal to second preset duration.

20. The apparatus according to claim 19, wherein the adjustment unit is specifically configured to:
adjust, within third preset duration, a vehicle speed of the vehicle from a current vehicle speed to the first speed limit value.

21. The apparatus according to any one of claims 16 to 20, wherein

the adjustment unit is further configured to adjust the speed limit value of the vehicle to a third speed limit value when a state of charge of the vehicle is less than or equal to a third threshold and/or a range corresponding to the state of charge is less than or equal to a fourth threshold, wherein
the first speed limit value is greater than the third speed limit value.

22. The apparatus according to any one of claims 16 to 20, wherein the apparatus further comprises a determining unit;

the obtaining unit is further configured to obtain a first target mileage of the vehicle;
the determining unit is configured to determine a first range based on a first state of charge of the vehicle and the first speed limit value; and
the adjustment unit is further configured to adjust the speed limit value of the vehicle to a third speed limit value when the first range is less than or equal to a first distance, wherein
the first distance is determined based on the first target mileage, and the first speed limit value is greater than the third speed limit value.

23. The apparatus according to claim 22, wherein

the obtaining unit is further configured to obtain a second target mileage of the vehicle;
the determining unit is further configured to determine a second range based on a second state of charge of the vehicle and the third speed limit value; and
the adjustment unit is further configured to adjust the speed limit value of the vehicle to a fourth speed limit value when the second range is less than or equal to a second distance, wherein
the second distance is determined based on the second target mileage, and the third speed limit value is greater than the fourth speed limit value.

24. The apparatus according to claim 23, wherein the obtaining unit is specifically configured to:

obtain the second target mileage when a user switches a destination; or
obtain the second target mileage when a destination cannot be reached based on the third speed limit value.

25. The apparatus according to any one of claims 22 to 24, wherein the obtaining unit is specifically configured to:

receive information about the first target mileage; and
when the user enters the destination, obtain the first target mileage based on the destination; or
obtain the first target mileage based on a historical travel record.

26. The apparatus according to any one of claims 22 to 25, wherein the determining unit is specifically configured to:
determine the first range based on the first state of charge of the vehicle, the first speed limit value, and historical energy consumption information of the vehicle.

27. The apparatus according to any one of claims 16 to 26, wherein

the adjustment unit is further configured to: when the vehicle is on a first-type road, adjust the speed limit value of the vehicle to a fifth speed limit value based on a congestion degree of the road and/or a speed limit value of the road, wherein
the first-type road comprises a highway, an urban road, or a suburban road.

28. The apparatus according to claim 27, wherein the adjustment unit is specifically configured to:
adjust the speed limit value of the vehicle to the fifth speed limit value when the road is smooth and the speed limit value of the road is greater than the first speed limit value, wherein the fifth speed limit value is greater than the first speed limit value.

29. The apparatus according to claim 27, wherein the adjustment unit is specifically configured to:
when the road is congested, adjust the speed limit value of the vehicle to the fifth speed limit value, wherein the fifth speed limit value is less than the first speed limit value.

30. The apparatus according to any one of claims 16 to 29, wherein the first mode is an ECO mode or a power-saving mode.

31. An apparatus, wherein the apparatus comprises:

a memory, configured to store a computer program; and
a processor, configured to execute the computer program stored in the memory, to enable the apparatus to perform the method according to any one of claims 1 to 15.

32. A vehicle, comprising the apparatus according to any one of claims 16 to 31.

33. A computer-readable storage medium, wherein the computer-readable storage medium stores a computer program, and when the computer program is executed by a computer, the method according to any one of claims 1 to 15 is implemented.

34. A chip, wherein the chip comprises a processor and a data interface, and the processor reads, through the data interface, instructions stored in a memory, to perform the method according to any one of claims 1 to 15.

Vehicle 100

Sensing system 120

Display apparatus 130

Computing platform 150

| Processor 151 | Processor 152 | ... | Processor 15n |

FIG. 1

205

The vehicle enters the ultra power-saving mode. The speed limit value of the vehicle in the ultra power-saving mode is 90 km/h

5G

201 202 203 204

Settings

Singer: xxx
A x x x x x x x B

80% 300 km

Navigation

25°C 24.5°C

FIG. 2(a)

206

It is detected that you are accelerating for overtaking. The speed limit value is already increased to 120 km/h for you

Settings

Singer: xxx
A x x x x x x x B

80%   300 km

Navigation

25°C     24.5°C

FIG. 2(b)

It is detected that you already complete overtaking. The speed limit value is already decreased to 90 km/h for you

207

Settings

Singer: xxx
A x x x x x x x B

80%   300 km

Navigation

25°C     24.5°C

FIG. 2(c)

FIG. 3(a)

It is detected that the state of charge is less than 10%. The speed limit value is already decreased to 70 km/h for you. Charge the vehicle in time

Settings

Singer: xxx

A x x x x x x x B

9%    60 km

Navigation

25°C    24.5°C

FIG. 3(b)

FIG. 4(a)

401

It is detected that the range is less than
40 km. The speed limit value is already
decreased to 70 km/h for you. Charge
the vehicle in time

5G

Singer: xxx

**A x x x x x x x B**

Settings

10%        60 km

Navigation

25°C        24.5°C

FIG. 4(b)

FIG. 5(a)

FIG. 5(b)

FIG. 5(c)

601

It is detected that you are currently driving on a highway and the road is smooth. The speed limit value is already increased to 110 km/h for you

Settings

Singer: xxx
**A x x x x x x x B**
80%  300 km

Navigation

25°C    24.5°C

FIG. 6(a)

602

It is detected that the road is currently congested. The speed limit value is already decreased to 70 km/h for you

Singer: xxx
A x x x x x x x B

Settings

80%   300 km

Navigation

25°C        24.5°C

FIG. 6(b)

System

Control apparatus 710

Driving habit learning module 711

Driving intention recognition module 712

Road condition information recognition module 713

Energy consumption information recording module 714

Speed limit value adjustment module 715

Executor 720

FIG. 7

800

Determine that a vehicle enters a
first mode

801

Obtain information about an
accelerator pedal opening and/or
an accelerator pedal opening
change rate

802

Determine
whether the
accelerator pedal
opening is greater than
or equal to a
threshold A

803

No

Yes

Determine
whether the
accelerator pedal opening
change rate is greater
than or equal to a
threshold B

805

No

Yes

Adjust a speed limit value of the
vehicle to a speed limit value 2

804

Adjust a speed limit value of the
vehicle to a speed limit value 3

806

FIG. 8

900

Determine that a vehicle enters a first mode
901

Determine a range 1 based on a state of charge and a speed limit value 1
902

Determine whether navigation information or map information may be obtained
903

No ⟶ ∼ TO FIG. 9B

Yes

Determine whether the state of charge is less than or equal to a threshold C
904

Determine whether the range is less than or equal to a threshold D
906

Adjust a speed limit value of the vehicle to a speed limit value 4
905

Adjust a speed limit value of the vehicle to a speed limit value 5
907

FIG. 9A

CONT.
FROM
FIG. 9A
~

Determine a target mileage 1 based on the
navigation information or the map information — 908

Determine
whether the range 1 is greater than
a first distance — 909

Yes

No

Adjust a speed limit value of the
vehicle to a speed limit value 6 — 910

Obtain a target mileage 2 — 911

Determine
whether a range 2 is greater than
a second distance — 912

Yes

No

Determine
whether the speed
limit value is already adjusted to
a minimum speed
limit value — 913

Yes

No

Prompt a user that the range is
insufficient to reach a destination, or
prompt a user to find a charging pile — 915

Adjust the speed limit value of the
vehicle to a speed limit value 7 — 914

FIG. 9B

1000

| Determine that a vehicle enters a first mode | 1001 |

| Adjust a speed limit value of the vehicle to a speed limit value 8 based on a congestion degree of a road and/or a speed limit value of the road | 1002 |

FIG. 10

1100

| Obtain an accelerator pedal opening and/or an accelerator pedal opening change rate of a vehicle running in a first mode, where a speed limit value of the vehicle in the first mode is a first speed limit value | 1101 |

| Adjust the speed limit value of the vehicle to a second speed limit value when it is detected that the accelerator pedal opening and/or the accelerator pedal opening change rate meet/meets a preset condition, where the second speed limit value is greater than the first speed limit value | 1102 |

FIG. 11

Apparatus 1200

Obtaining unit 1210

Adjustment unit 1220

FIG. 12

## INTERNATIONAL SEARCH REPORT

| International application No. |
| --- |
| **PCT/CN2022/102795** |

**A. CLASSIFICATION OF SUBJECT MATTER**

B60L 15/20(2006.01)i; B60W 30/182(2020.01)i; B60W 40/00(2006.01)i

According to International Patent Classification (IPC) or to both national classification and IPC

**B. FIELDS SEARCHED**

Minimum documentation searched (classification system followed by classification symbols)

B60L; B60W

Documentation searched other than minimum documentation to the extent that such documents are included in the fields searched

Electronic data base consulted during the international search (name of data base and, where practicable, search terms used)

EPODOC, WPI, CNPAT, CNKI: 华为, 刘东辉, 郭振华, 周国柱, 章斯亮, 车, 模式, 限速, 限制, 最高, 最大, 阈值, 车速, 速度, 加速, 油门, 踏板, 电池, 电量, SOC, 荷电, 续航, 续驶, 里程, 距离, 路径, 路程, vehicle, mode, limit, max+, high+, threshold, speed, accelerat+, pedal, battery, level, state, charge, endurance, range, mileage, distance, route

**C. DOCUMENTS CONSIDERED TO BE RELEVANT**

| Category* | Citation of document, with indication, where appropriate, of the relevant passages | Relevant to claim No. |
| --- | --- | --- |
| X | CN 110667589 A (GREAT WALL MOTOR COMPANY LIMITED) 10 January 2020 (2020-01-10) description, paragraphs 37-88, and figures 1-5 | 1-6, 12-21, 27-34 |
| Y | CN 110667589 A (GREAT WALL MOTOR COMPANY LIMITED) 10 January 2020 (2020-01-10) description, paragraphs 37-88, and figures 1-5 | 7-11, 22-26 |
| Y | CN 108146437 A (BOSCH AUTOMOTIVE PRODUCTS (SUZHOU) CO., LTD.) 12 June 2018 (2018-06-12) description, paragraphs 30-81, and figures 1-4 | 7-11, 22-26 |
| A | CN 112776826 A (DONGFENG LIUZHOU MOTOR CO., LTD.) 11 May 2021 (2021-05-11) entire document | 1-34 |
| A | CN 105711592 A (NIO NEXTEV LIMITED) 29 June 2016 (2016-06-29) entire document | 1-34 |
| A | CN 112092816 A (CHONGQING CHANGAN AUTOMOBILE CO., LTD.) 18 December 2020 (2020-12-18) entire document | 1-34 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 December 2022** | **19 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/102795** |

**C.** **DOCUMENTS CONSIDERED TO BE RELEVANT**

| Category* | Citation of document, with indication, where appropriate, of the relevant passages | Relevant to claim No. |
| --- | --- | --- |
| A | CN 111186339 A (BEIJING BORGWARD AUTOMOBILE CO., LTD.) 22 May 2020 (2020-05-22)<br>    entire document | 1-34 |
| A | DE 102018217885 A1 (DENSO CORPORATION) 25 April 2019 (2019-04-25)<br>    entire document | 1-34 |

Form PCT/ISA/210 (second sheet) (January 2015)

**INTERNATIONAL SEARCH REPORT**
Information on patent family members

International application No.

**PCT/CN2022/102795**

| Patent document cited in search report | | | Publication date (day/month/year) | Patent family member(s) | | | Publication date (day/month/year) |
|---|---|---|---|---|---|---|---|
| CN | 110667589 | A | 10 January 2020 | WO | 2020135632 | A1 | 02 July 2020 |
| CN | 108146437 | A | 12 June 2018 | WO | 2018104314 | A1 | 14 June 2018 |
| CN | 112776826 | A | 11 May 2021 | | None | | |
| CN | 105711592 | A | 29 June 2016 | US | 2019111926 | A1 | 18 April 2019 |
| | | | | EP | 3450276 | A1 | 06 March 2019 |
| | | | | WO | 2017186002 | A1 | 02 November 2017 |
| CN | 112092816 | A | 18 December 2020 | | None | | |
| CN | 111186339 | A | 22 May 2020 | WO | 2020098147 | A1 | 22 May 2020 |
| DE | 102018217885 | A1 | 25 April 2019 | JP | 2019077211 | A | 23 May 2019 |

Form PCT/ISA/210 (patent family annex) (January 2015)